# EUROPEAN PATENT APPLICATION

(11) **EP 4 557 153 A1**
(43) Date of publication of application: **21.05.2025**
(21) Application number: 23838727.8
(22) Date of filing: 30.06.2023
(51) Int. Cl.: G06F 30/27

(54) **METHOD, APPARATUS AND DEVICE FOR ANALYZING ARTIFICIAL INTELLIGENCE REQUEST**

(30) Priority: 11.07.2022 CN 202210813689
(71) Applicant: Vivo Mobile Communication Co., Ltd., Dongguan, Guangdong 523863 (CN)
(72) Inventor: ZHOU, Tong, Dongguan, Guangdong 523863 (CN); YUAN, Yannan, Dongguan, Guangdong 523863 (CN); PAN, Xiang, Dongguan, Guangdong 523863 (CN)
(74) Representative: Lavoix
(86) International application number: PCT/CN2023/104331
(87) International publication number: WO 2024/012235

(57) **Abstract**

The present application discloses an artificial intelligence request analysis method and apparatus and a device and belongs to the field of artificial intelligence technologies. The method of the embodiments of the present application includes: determining, by a first device, first information based on a first request of a second device, where a category of the first request includes an AI inference service request or a self-evolution request; determining, by the first device, an auxiliary device that completes the first request, where auxiliary device is a third device and/or a fourth device; and transferring, by the first device, the first information to the auxiliary device; where the third device is configured to provide a candidate AI model and model information of the candidate AI model, the fourth device is configured to split the first request into a target request and send the target request to a corresponding functional entity to assist in completing the first request, and target request includes: at least one of a connection request, a computing power request, an algorithm request, and a data request; and the first request includes at least one of the following: a service description corresponding to an AI model; first quality of service; an AI capability that second device can provide; and update indication information.

## Description

### CROSS-REFERENCE TO RELATED APPLICATIONS

The present application claims priority to Chinese Patent Application No. 202210813689.4 filed on July 11, 2022, which is incorporated herein by reference in its entirety.

### TECHNICAL FIELD

The present application belongs to the field of artificial intelligence technologies, and specifically, relates to an artificial intelligence request analysis method and apparatus and a device.

### BACKGROUND

Currently, many potential usage cases of wireless mobile communications systems combined with artificial intelligence (Artificial Intelligence, AI) have emerged, for example, AI-based channel quality compression, AI-based beam management, and AI-based positioning at a physical layer. Beam management is used as an example. In millimeter wave wireless communication, both a communication sending end and a communication receiving end (for example, a base station and a user equipment (User Equipment, UE) end) are configured with multiple analog beams. For same UE, channel quality measured in different sending and receiving analog beams changes. How to quickly and accurately find a sending and receiving beam combination with the highest channel quality from all possible sending and receiving analog beam combinations is crucial for transmission quality. After an AI neural network model is introduced, a terminal can effectively predict sending and receiving analog beams with the highest channel quality based on a part of history channel quality information, and report the beams to a network side.

On the one hand, after being deployed to a network, the AI neural network model can be called by a network element as an AI service to provide a corresponding AI inference service. On the other hand, if the model can be further updated and upgraded based on data collected from an existing network, the performance of the AI neural network model can be further improved.

At present, a mobile communications system mainly solves a network connection problem, that is, analyzes a connection request. There is no mature solution yet for analysis of an intra-network AI service request and an AI model upgrade request of a network element.

### SUMMARY

Embodiments of the present application provide an artificial intelligence request analysis method and apparatus and a device, to implement analysis of an intra-network AI service request and an AI model upgrade request of a network element.

According to a first aspect, an artificial intelligence request analysis method is provided, including:
determining, by a first device, first information based on a first request of a second device, where a category of the first request includes an artificial intelligence AI inference service request or a self-evolution request;
determining, by the first device, an auxiliary device that processes the first request, where the auxiliary device is a third device and/or a fourth device; and
transferring, by the first device, the first information to the auxiliary device;
where the third device is configured to provide a candidate AI model and model information of the candidate AI model, the fourth device is configured to split the first request into a target request and send the target request to a corresponding functional entity to assist in completing the first request, and the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to a second aspect, an artificial intelligence request analysis apparatus is provided, applied to a first device, including:
a first determination module, configured to determine first information based on a first request of a second device, where a category of the first request includes an artificial intelligence AI inference service request or a self-evolution request;
a second determination module, configured to determine an auxiliary device that completes the first request, where the auxiliary device is a third device and/or a fourth device; and
a first transfer module, configured to transfer the first information to the auxiliary device;
where the third device is configured to provide a candidate AI model and model information of the candidate AI model, the fourth device is configured to split the first request into a target request and send the target request to a corresponding functional entity to assist in completing the first request, and the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to a third aspect, an artificial intelligence request analysis method is provided, including:
transferring, by a second device, a first request to a first device, where a category of the first request includes an artificial intelligence AI inference service request or a self-evolution request; and
obtaining, by the second device, second model information transferred by the first device, where the second model information is determined by the first device based on a candidate AI model and model information of the candidate AI model transferred by a third device;
where the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to a fourth aspect, an artificial intelligence request analysis apparatus is provided, applied to a second device, including:
a second transfer module, configured to transfer a first request to a first device, where a category of the first request includes an artificial intelligence AI inference service request or a self-evolution request; and
a first obtaining module, configured to obtain second model information transferred by the first device, where the second model information is determined by the first device based on a candidate AI model and model information of the candidate AI model transferred by a third device;
where the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to a fifth aspect, an artificial intelligence request analysis method is provided, including:
obtaining, by a third device, first information transferred by a first device, where the first information is determined by the first device based on a first request of a second device, and a category of the first request includes an artificial intelligence AI inference service request or a self-evolution request; and
transferring, by the third device, a candidate AI model and model information of the candidate AI model to the first device based on the first information;
where the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to a sixth aspect, an artificial intelligence request analysis apparatus is provided, applied to a third device, including:
a second obtaining module, configured to obtain first information transferred by a first device, where the first information is determined by the first device based on a first request of a second device, and a category of the first request includes an artificial intelligence AI inference service request or a self-evolution request; and
a third transfer module, configured to transfer a candidate AI model and model information of the candidate AI model to the first device based on the first information;
where the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to a seventh aspect, an artificial intelligence request analysis method is provided, including:
obtaining, by a fourth device, first information transferred by a first device, where the first information is determined by the first device based on a first request of a second device, and a category of the first request includes an artificial intelligence AI inference service request or a self-evolution request;
splitting, by the fourth device, the first request into a target request based on the first information; and
sending, by the fourth device, the target request to a corresponding functional entity to assist in completing the first request;
where the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to an eighth aspect, an artificial intelligence request analysis apparatus is provided, applied to a fourth device, including:
a third obtaining module, configured to obtain first information transferred by a first device, where the first information is determined by the first device based on a first request of a second device, and a category of the first request includes an artificial intelligence AI inference service request or a self-evolution request;
a splitting module, configured to split the first request into a target request based on the first information; and
a sending module, configured to send the target request to a corresponding functional entity to assist in completing the first request;
where the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to a ninth aspect, an artificial intelligence request analysis device is provided. The artificial intelligence request analysis device is a first device, and includes a processor and a memory. The memory stores a program or an instruction executable on the processor, and when the program or the instruction is executed by the processor, the steps of the method according to the first aspect are performed.

According to a tenth aspect, an artificial intelligence request analysis device is provided. The artificial intelligence request analysis device is a first device, and includes a processor and a communications interface. The processor is configured to: determine first information based on a first request of a second device, where a category of the first request includes an artificial intelligence AI inference service request or a self-evolution request; and determine an auxiliary device that completes the first request, where the auxiliary device is a third device and/or a fourth device. The communications interface is configured to transfer the first information to the auxiliary device;
where the third device is configured to provide a candidate AI model and model information of the candidate AI model, the fourth device is configured to split the first request into a target request and send the target request to a corresponding functional entity to assist in completing the first request, and the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to an eleventh aspect, an artificial intelligence request analysis device is provided. The artificial intelligence request analysis device is a second device, and includes a processor and a memory. The memory stores a program or an instruction executable on the processor, and when the program or the instruction is executed by the processor, the steps of the method according to the third aspect are performed.

According to a twelfth aspect, an artificial intelligence request analysis device is provided. The artificial intelligence request analysis device is a second device, and includes a processor and a communications interface. The communications interface is configured to transfer a first request to a first device, where a category of the first request includes an artificial intelligence AI inference service request or a self-evolution request. The processor is configured to obtain second model information transferred by the first device, where the second model information is determined by the first device based on a candidate AI model and model information of the candidate AI model transferred by a third device;
where the first request includes at least one of the following:
a service description corresponding to an AI model;
first quality of service;
an AI capability that the second device can provide; and
update indication information, where the update indication information includes: indication information that allows a structure of an AI model to be updated and/or allows a parameter of an AI model to be updated.

According to a thirteenth aspect, an artificial intelligence request analysis device is provided. The artificial intelligence request analysis device is a third device, and includes a processor and a memory. The memory stores a program or an instruction executable on the processor, and when the program or the instruction is executed by the processor, the steps of the method according to the fifth aspect are performed.

According to a fourteenth aspect, an artificial intelligence request analysis device is provided. The artificial intelligence request analysis device is a third device, and includes a processor and a communications interface. The processor is configured to obtain first information transferred by a first device, where the first information is determined by the first device based on a first request of a second device, and a category of the first request includes an artificial intelligence AI inference service request or a self-evolution request. The communications interface is configured to transfer a candidate AI model and model information of the candidate AI model to the first device based on the first information;
where the first request includes at least one of the following:
a service description corresponding to an AI model;
first quality of service;
an AI capability that the second device can provide; and
update indication information, where the update indication information includes: indication information that allows a structure of an AI model to be updated and/or allows a parameter of an AI model to be updated.

According to a fifteenth aspect, an artificial intelligence request analysis device is provided. The artificial intelligence request analysis device is a fourth device, and includes a processor and a memory. The memory stores a program or an instruction executable on the processor, and when the program or the instruction is executed by the processor, the steps of the method according to the seventh aspect are performed.

According to a sixteenth aspect, an artificial intelligence request analysis device is provided. The artificial intelligence request analysis device is a fourth device, and includes a processor and a communications interface. The processor is configured to: obtain first information transferred by a first device, where the first information is determined by the first device based on a first request of a second device, and a category of the first request includes an artificial intelligence AI inference service request or a self-evolution request; and split the first request into a target request based on the first information. The communications interface is configured to send the target request to a corresponding functional entity to assist in completing the first request;
where the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

According to a seventeenth aspect, an artificial intelligence request analysis system is provided, including: a first device, a second device, a third device, and a fourth device. The first device may be configured to perform the steps of the artificial intelligence request analysis method according to the first aspect. The second device may be configured to perform the steps of the artificial intelligence request analysis method according to the third aspect. The third device can be configured to perform the steps of the artificial intelligence request analysis method according to the fifth aspect. The fourth device can be configured to perform the steps of the artificial intelligence request analysis method according to the seventh aspect.

According to an eighteenth aspect, a readable storage medium is provided. The readable storage medium stores a program or an instruction, and when the program or the instruction is executed by a processor, the steps of the method according to the first aspect, the third aspect, the fifth aspect, or the seventh aspect are performed.

According to a nineteenth aspect, a chip is provided. The chip includes a processor and a communications interface, the communications interface is coupled to the processor, and the processor is configured to run a program or an instruction, to perform the method according to the first aspect, the third aspect, the fifth aspect, or the seventh aspect.

According to a twentieth aspect, a computer program/program product is provided. The computer program/program product is stored in a storage medium, and the computer program/program product is executed by at least one processor to perform the steps of the method according to the first aspect, the third aspect, the fifth aspect, or the seventh aspect.

In the embodiments of the present application, the first device determines the first information based on the AI inference service request or the self-evolution request of the second device, determines the auxiliary device that completes the first request, and transfers the first information to the auxiliary device. The auxiliary device is the third device and/or the fourth device. The third device obtains the candidate AI model or the fourth device splits the first request and another functional entity assists in processing the first request, to implement analysis of an intra-network AI service request and an AI model upgrade request of a network element, thereby enabling self-evolution of a network function and provision of an AI service within a network.

### BRIEF DESCRIPTION OF THE DRAWINGS

FIG. 1 is a block diagram of a wireless communications system to which an embodiment of the present application is applicable;
FIG. 2 is a first schematic flowchart of an artificial intelligence request analysis method according to an embodiment of the present application;
FIG. 3 is a second schematic flowchart of an artificial intelligence request analysis method according to an embodiment of the present application;
FIG. 4 is a third schematic flowchart of an artificial intelligence request analysis method according to an embodiment of the present application;
FIG. 5 is a fourth schematic flowchart of an artificial intelligence request analysis method according to an embodiment of the present application;
FIG. 6 is a first schematic diagram of modules of an artificial intelligence request analysis apparatus according to an embodiment of the present application;
FIG. 7 is a first schematic structural diagram of a first device according to an embodiment of the present application;
FIG. 8 is a second schematic structural diagram of a first device according to an embodiment of the present application;
FIG. 9 is a third schematic structural diagram of a first device according to an embodiment of the present application;
FIG. 10 is a second schematic diagram of modules of an artificial intelligence request analysis apparatus according to an embodiment of the present application;
FIG. 11 is a third schematic diagram of modules of an artificial intelligence request analysis apparatus according to an embodiment of the present application;
FIG. 12 is a fourth schematic diagram of modules of an artificial intelligence request analysis apparatus according to an embodiment of the present application; and
FIG. 13 is a schematic structural diagram of a communications device according to an embodiment of the present application.

### DETAILED DESCRIPTION

The following clearly describes the technical solutions in the embodiments of the present application with reference to the accompanying drawings in the embodiments of the present application. Obviously, the described embodiments are some but not all of the embodiments of the present application. All other embodiments obtained by persons of ordinary skill in the art based on the embodiments of the present application shall fall within the scope of protection of the present application.

In the specification and claims of the present application, the terms such as "first" and "second" are used for distinguishing similar objects, and are not necessarily used to describe a particular order or sequence. It is to be understood that the terms so used are interchangeable under appropriate circumstances such that the embodiments of the present application can be implemented in sequences other than those illustrated or described herein, and "first" and "second" generally distinguish objects of a same category, and the number of objects is not limited. For example, there may be one or more first objects. In addition, in the specification and claims, "and/or" means at least one of connected objects, and the character "/" generally means that associated objects are in an "or" relationship.

It should be noted that the technology described in the embodiments of the present application is not limited to a long term evolution (Long Term Evolution, LTE)/LTE-advanced (LTE-Advanced, LTE-A) system, and may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of the present application are often used interchangeably, and the described technology can be used not only for the systems and radio technologies mentioned above, but also for other systems and radio technologies. However, a new radio (New Radio, NR) system is described in the following description for illustrative purposes, and the NR terminology is used in most of the following description, although these technologies can also be applied to applications other than the NR system application, such as the 6th generation (6th Generation, 6G) communication system.

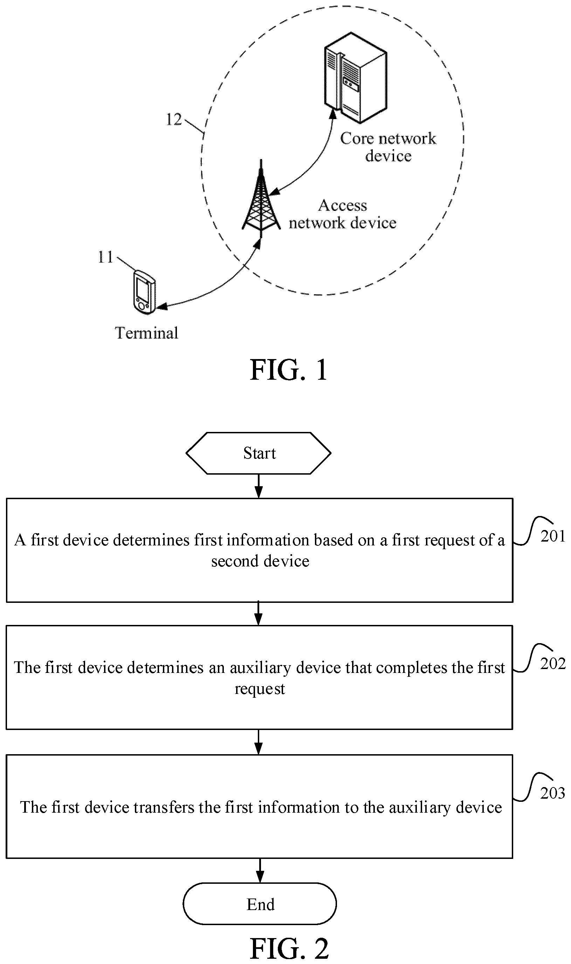

FIG. 1 is a block diagram of a wireless communications system to which an embodiment of the present application is applicable. The wireless communications system includes a terminal 11 and a network side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home appliance (home equipment with a wireless communication function, such as a refrigerator, a TV, a washing machine or a furniture), and terminal side equipment such as a game console, a personal computer (personal computer, PC), an ATM or a self-service machine. The wearable device includes: smart watches, smart bracelets, smart headphones, smart glasses, smart jewelry (smart bracelets, smart rings, smart necklaces, smart anklets, or the like), smart wristbands, smart clothing, or the like. It should be noted that the specific category of the terminal 11 is not limited in the embodiments of the present application. The network side device 12 may include an access network device or a core network device, where the access network device may also be referred to as a radio access network device, a radio access network (Radio Access Network, RAN), a radio access network function or a radio access network unit. The access network device may include a base station, a wireless local area network (Wireless Local Area Networks, WLAN) access point, a WiFi node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or other appropriate terms in the art. As long as a same technical effect is achieved, the base station is not limited to a specified technical term. It should be noted that, in embodiments of the present application, only a base station in the NR system is used as an example, but a specific category of the base station is not limited. The core network device may include but is not limited to at least one of the following: core network nodes, core network functions, mobility management entities (Mobility Management Entity, MME), access and mobility management functions (Access and Mobility Management Function, AMF), session management functions (Session Management Function, SMF), user plane functions (User Plane Function, UPF), policy control functions (Policy Control Function, PCF), policy and charging rules functions (Policy and Charging Rules Function, PCRF), edge application server discovery functions (Edge Application Server Discovery Function, EASDF), unified data management (Unified Data Management, UDM), unified data repository (Unified Data Repository, UDR), home subscriber servers (Home Subscriber Server, HSS), centralized network configuration (Centralized network configuration, CNC), network repository functions (Network Repository Function, NRF), network exposure functions (Network Exposure Function, NEF), local NEFs (Local NEF, or L-NEF), binding support functions (Binding Support Function, BSF), application functions (Application Function, AF), or the like. It should be noted that in the embodiments of the present application, only the core network device in the NR system is used as an example for introduction, and the specific category of the core network device is not limited.

An artificial intelligence request analysis method and apparatus and a device provided by the embodiments of the present application will be described in detail below with reference to the accompanying drawings through some embodiments and their application scenarios.

As shown in FIG. 2, an embodiment of the present application provides an artificial intelligence request analysis method, including:
Step 201: A first device determines first information based on a first request of a second device.

A category of the first request includes an artificial intelligence (AI) inference service request or a self-evolution request.

Step 202: The first device determines an auxiliary device that completes the first request, where the auxiliary device is a third device and/or a fourth device.

It should be noted that completing the first request refers to processing the first request. The third device is configured to provide a candidate AI model and model information of the candidate AI model, the fourth device is configured to split the first request into a target request and send the target request to a corresponding functional entity to assist in completing the first request, and the target request includes: at least one of a connection request, a computing power request, an algorithm request, and a data request.

Step 203: The first device transfers the first information to the auxiliary device.

It should be noted that the first request includes at least one of the following: a service description corresponding to an AI model; first quality of service; an AI capability that the second device can provide; and update indication information.

### A11: Service description corresponding to AI model.

Optionally, the service description corresponding to the AI model includes at least one of the following: a service action, service action configuration information, and a usage scenario.

### A111: Service action.

Optionally, the service action includes at least one of the following:

### A1111: Service traffic prediction.

It can be understood as using an AI model to predict a service traffic of a user, a network element, or a link.

### A1112: Prediction of a transmission beam with the highest channel quality.

It can be understood as using an AI model to predict a transmission beam with the highest signal quality of a base station in downlink transmission.

### A1113: Channel matrix prediction.

It can be understood as using an AI model to predict a downlink or an uplink multi-antenna channel matrix.

### A1114: Channel feature vector compression and feedback.

It can be understood as using an AI model to compress a channel feature vector and feed back a compression result.

### A1115: Layer 3 reference signal received power (Reference Signal Receiving Power, RSRP).

It can be understood as using an AI model to predict layer 3 RSRP.

### A1116: Configuration parameter optimization.

It can be understood as using an AI model to optimize a configuration parameter of a network function or a network element.

### A1117: Protocol stack module selection.

It can be understood as using an AI model to select components of a protocol stack to match different service categories.

### A112: Service action configuration information.

Optionally, the service action configuration information is a relevant configuration describing an AI service action output, and includes at least one of the following:
A1121: Service action output data item.
A1122: Dimension of the service action output data item.

For example, the dimension may include but is not limited to: a time dimension, a beam dimension, a frequency dimension, and the like.

### A1123: Maximum interval of each dimension of the service action output data item.

For example, the maximum interval can be understood as being used to define output intervals in different dimensions. For example, if the dimension of the service action output data item is the time dimension, the maximum interval is used to indicate the maximum time interval at which data items are outputted.

### A1124: Minimum number of service action output data items in each dimension.

The minimum number is used to define a minimum number limit of output data items corresponding to each dimension. For example, if the dimension of the service action output data item is the beam dimension, the minimum number is used to represent a minimum number limit of output data items corresponding to the beam dimension. For example, if the minimum number is 4, the number of output data items corresponding to the beam dimension should be greater than or equal to 4.

### A113: Usage scenario.

For example, the usage scenario of the AI model can be a channel scenario and a UE mobility scenario.

### A12: First quality of service.

Optionally, the first quality of service includes at least one of the following: computing power quality, algorithm quality, data quality, and network connection quality.

### A121: Computing power quality.

Optionally, the computing power quality includes at least one of the following:
an inference latency; and
a training latency.

### A122: Algorithm quality.

Optionally, the algorithm quality includes at least one of the following:

### A1221: AI classification problem evaluation metric.

An example is a recall rate and precision.

### A1222: AI regression problem evaluation metric.

An example is a root mean square error and a mean absolute error.

### A1223: Reinforcement learning evaluation metric.

An example is a latency reduction ratio and a throughput improvement ratio.

### A123: Data quality.

Optionally, the data quality includes at least one of the following:

### A1231: Prediction time interval.

It should be noted that the prediction time interval may include, but is not limited to, at least one of the following: a desired prediction time interval and a tolerance upper limit of the prediction time interval (which can also be understood as a maximum allowable prediction time interval). For example, if the desired prediction time interval requested in the first request is 1 hour and the tolerance upper limit of the prediction time interval is 2 hours, a final prediction time interval that can be used may be 1.5 hours.

### A1232: Number of prediction time intervals.

It should be noted that a number of prediction time intervals can be understood as a number of predictions based on the interval indicated by the prediction time interval. For example, if the prediction time interval is 1 hour and the number of prediction time intervals is 4, prediction needs to be performed once every 1 hour and 4 prediction results need to be obtained. For example, the first prediction is performed at 7 o'clock, the second prediction is performed at 8 o'clock, the third prediction is performed at 9 o'clock, and the fourth prediction is performed at 10 o'clock.

### A1233: Data obtaining latency.

The data obtaining latency is used to limit an obtaining latency of model inference data or training data allowed by the second device when inference or training is performed by the second device.

### A1234: Data collection latency.

The data collection latency is used to limit a collection latency of model inference data or training data allowed by the second device when inference or training is performed by the second device.

### A124: Network connection quality.

### A13: AI capability that the second device can provide.

It should be noted that the AI capability includes at least one of the following: computing power, an algorithmic capability, and a data capability.

### A131: Computing power.

Optionally, the computing power may include, for example, at least one of the following:
inference computing power;
training computing power;
a storage capacity;
a total computing amount;
an execution time; and
an electricity amount.

### A132: Algorithm capability.

Optionally, the algorithm capability may include, for example, at least one of the following:
supported AI task classification such as model inference, model training, and model monitoring;
supported AI training algorithms, where optionally, the AI training algorithm includes at least one of the following: supervised learning, unsupervised learning, reinforcement learning, transfer learning, and meta-learning;
supported AI network development frameworks such as Pytorch and tensorflow; and
supported AI basic model libraries.

### A133: Data capability.

Optionally, the data capability may be, for example, data required for training, that is, data required for training that the second device can provide, a data service capability, a label data collection capability, an input data collection capability, a data annotation capability, and a data preprocessing capability.

### A14: Update indication information.

The update indication information includes: indication information that allows a structure of an AI model to be updated and/or allows a parameter of an AI model to be updated.

It should be noted that when the first request includes indication information that allows the structure of the AI model to be updated, it means that the second device allows a structure of an existing AI model of the second device to be updated, but a parameter used by the AI model usually cannot be updated. In this case, it can be understood that parameter update is restricted. When the first request includes indication information that allows the parameter of the AI model to be updated, it means that the second device allows the parameter of the existing AI model of the second device to be updated, but the structure of the AI model usually cannot be updated. In this case, it can be understood that structure update is restricted. When the first request includes indication information that allows the structure of the AI model to be updated and allows the parameter of the AI model to be updated, it means that the second device allows the structure of the existing AI model of the second device to be updated and allows the parameter used by the AI model to be updated. Specifically, whether to update the structure or the parameter, or whether to update the structure and the parameter is determined by the first device. In this case, it can be understood that neither structure update nor parameter update is restricted.

It should be noted that the first device in the embodiments of the present application is an AI service application analysis device, and analyzes an AI service application, including problem modeling and technology selection. The first device is, for example, an inference or training function in a terminal, an inference or training function of an access network device (for example, a base station), an inference or training function of a core network side, an inference or training function of operation administration and maintenance (Operation Administration and Maintenance, OAM), a self-organizing network (Self-Organizing Network, SON), a policy control function (Policy Control function, PCF), a network administrator, and operation administration and maintenance (OAM). The second device is a device that applies for AI services, and can apply for AI services provided by other inference devices, or can apply for data services required for AI model inference of the second device from other devices, or can apply for an AI model upgrade service of the second device. The second device is, for example, UE, an access network device (for example, a base station), OAM, an SON, a core network device (for example, a network data analytics function (Network Data Analytics Function, NWDAF) network element, or a newly defined network element responsible for decision-making), and a network administrator. The third device can be understood as a device that provides an AI model library and can add, delete, query, and manage parameters of mature general models in the sector or mature general models in domains. For example, the third device can be a newly defined core network device (a core network element), a network administrator, OAM, and an SON. The fourth device is an AI workflow decision-making device, and splits an AI service request into a computing power request, an algorithm request, a data request, and a connection request. The fourth device is, for example, an AI control function or an inference or training function of UE, an AI control function or an inference or training function of a base station, an AI control function or an inference or training function of a core network, an SON, a network administrator, or OAM.

Optionally, the AI inference service request in at least one embodiment of the present application is a request initiated by the second device after the second device performs inference based on an existing AI model, but finds that its own data capability cannot satisfy the data requirement of model inference. The existing AI model may exist on the second device itself. Optionally, in this case, there is no need for the third device to provide the AI model. If the existing AI model does not exist on the second device itself, the existing AI model should exist in the AI model library, that is, the AI model is provided by the third device.

Optionally, the self-evolution request in at least one embodiment of the present application is a request triggered autonomously by the second device to improve performance. The self-evolution request includes at least one of the following:

### A21: AI model upgrade request.

It should be noted that the AI model upgrade request is used to request to upgrade the existing AI model in the second device.

### A22: Performance feedback request based on existing AI model.

The performance feedback request can be understood as a request to perform performance testing on the existing AI model in the second device to achieve performance feedback.

Optionally, when models requested by A21 and A22 do not need to be trained, that is, the third device already has the latest model information, the first device can directly obtain the model information of the relevant AI model from the third device. When models requested by A11 and A12 need to be trained, or the first device sends an AI inference service request, the first device needs to send the first information to the fourth device, so that the fourth device splits the first request.

Optionally, the first information includes information indicating at least one of the following: an algorithm corresponding to the first request, computing power corresponding to the first request, a manner of obtaining data used in the first request, and second quality of service.

### B11: Algorithm corresponding to the first request.

Optionally, the corresponding algorithm includes at least one of the following: an input and an output of the AI model, an AI training algorithm, an AI technology category, AI model identification information, an AI model capability category, and a usage scenario.
B111: Input and output of the AI model.
B112: AI training algorithm.

Optionally, the AI training algorithm includes at least one of the following:
B1121: Supervised learning.
B1122: Unsupervised learning.
B1123: Reinforcement learning.
B1124: Transfer learning.
B1125: Meta-learning.

It should be noted that if the first request does not involve AI model training, an empty value may be assigned to the item of the algorithm corresponding to the first request.

### B113: AI technology category.

Optionally, the AI technology category includes at least one of the following:

### B1131: Regression problem.

It should be noted that the regression problem can be understood as that a technology category is predicting the relationship between input variables and output variables.

### B1132: Classification problem.

It should be noted that the classification problem can be understood as that a technology category is determining, based on characteristics of known samples, a known sample class that a new sample belongs to.

### B1133: Segmentation problem.

It should be noted that the segmentation problem can be understood as that a technology category is label prediction of pixel-level regions.

### B1134: Localization problem.

It should be noted that the localization problem can be understood as that a technology category is target localization.

### B1135: Detection problem.

It should be noted that the detection problem can be understood as that a technology category is localization and classification.

### B114: Identification information of the AI model.

It should be noted that the identification information is used to indicate a unique identification of the AI model, and can also indicate information of the AI model such as a producer, an operator, a user, a function, a version, and a usage scenario.

### B115: Capability category of the AI model.

Optionally, the capability category of the AI model includes at least one of the following:
B1151: Image super-resolution.
B1152: Capability of predicting a spatiotemporal sequence.
B1153: Capability of predicting a multidimensional time sequence.
B1154: Image compression and decompression capabilities.
B1155: Graph neural network.
B116: Usage scenario.

For example, the usage scenario of the AI model can be a channel scenario and a UE mobility scenario.

### B12: Computing power corresponding to the first request.

It should be noted that the computing power corresponding to the first request is a computing resource of a target device for performing inference or training corresponding to the first request.

The target device includes at least one of the following: a terminal, an access network device, a core network device, and operation administration and maintenance (OAM).

For example, when the first request is an AI model upgrade request, the target device for training corresponding to the first request is a network element requesting AI model upgrade, and is the second device. Optionally, in this case, the first device and the second device are located in a same device. For example, the first device and the second device are both located in a terminal.

### B13: Manner of obtaining data used in the first request.

Optionally, the manner of obtaining the data includes one of the following:
B131: Real-time obtaining. For example, when using the real-time obtaining manner, a device for training or inference needs to obtain real-time data to complete training or inference.
B132: Static obtaining. For example, when using the static obtaining manner, when the first device obtains the first request, a device for training or inference can complete training or inference based on data that has been obtained before.
B14: Second quality of service.

It should be noted that the second quality of service may include any one or more of A121 to A124.

It should also be noted herein that optionally, when the first request includes the first quality of service, the second quality of service can be obtained directly based on the first quality of service. That is, the second quality of service is obtained based on the analysis of the first quality of service, and includes content included in the first quality of service, but may not be completely consistent with the first quality of service. For example, an inference latency included in the first quality of service is 3s, but an inference latency included in the second quality of service obtained based on the first quality of service may be shorter, such as 2s.

It should be noted that future mobile communications systems can support self-generation of AI usage case descriptions. The information included in the first request may be incomplete or the description may be less specific. If the first request is not parsed, the first request cannot be transferred to the corresponding function to complete a corresponding operation in response to the first request. In this case, optionally, in at least one embodiment of the present application, an implementation of determining, by a first device, first information based on a first request of a second device includes:
performing, by the first device, first processing and obtaining the first information based on the first request of the second device;
where the first processing includes at least one of the following: performing algorithm selection, performing computing power selection, determining a manner of obtaining data used in the first request, and determining the second quality of service.

### C11: Perform algorithm selection.

Optionally, a specific implementation of algorithm selection includes:
performing mathematical problem modeling mapping based on the service description corresponding to the AI model in the first request, to determine the algorithm corresponding to the first request, where the algorithm corresponding to the first request is used by the third device to determine a matching candidate AI model based on mathematical problem modeling, and is used by the fourth device to determine a data item that needs to be collected in a data request, or is used by the fourth device to determine an AI training algorithm in an algorithm request.

For example, if the service description is to predict user equipment quality of experience (User Equipment Quality of Experience, UE QoE) after 1h, details need to be analyzed as: an input is previous 10 hours, a time interval is 1h, an output is UE QoE of the next 1h, the technology category is regression problem, and the AI capability category is time sequence prediction problem.

Compared with the first request, the algorithm corresponding to the first request is more conducive for the third device to perform model retrieval or for the fourth device to perform data collection.

### C12: Perform computing power selection.

Optionally, a specific implementation of performing computing power selection is:
determining, based on a result of mathematical problem modeling mapping performed on the service description corresponding to the AI model in the first request, the first quality of service, and/or the AI capability that the second device can provide, the computing power corresponding to the first request.

For example, when training is performed based on an AI model, a set of candidate devices can be obtained based on the result of mathematical problem modeling mapping, then another set of candidate devices can be obtained based on the training latency in the first quality of service, and finally the intersection of the two sets is obtained to obtain the target device that finally performs training corresponding to the first request.

### C13: Determine a manner of obtaining data used in the first request.

Optionally, a specific implementation of determining a manner of obtaining data used in the first request is:
determining, based on the request category of the first request, the first quality of service in the first request, and/or the AI capability that the second device can provide, the manner of obtaining the data used in the first request.

For example, for a self-evolution request, based on the training latency in the first quality of service and the data capability of the second device, it is determined whether sample data is obtained in real time or existing data is used (that is, the static obtaining manner).

### C14: Determine second quality of service.

Optionally, a specific implementation of determining the second quality of service is:
determining the second quality of service based on a result of mathematical problem modeling mapping performed on the service description corresponding to the AI model in the first request, and/or the first quality of service.

For example, the inference latency can be directly determined based on the inference latency in the first quality of service. Alternatively, based on the result of mathematical problem modeling mapping performed on the service description, an inference latency configuration of a similar history problem is found as the inference latency.

It should be noted that through the first processing, the first request can be mapped to information that is easier for the third device and/or the fourth device to understand, so that the third device and the fourth device can implement the first request more efficiently and quickly.

For example, a correspondence table of how each item in the first information is determined based on the first request is shown in Table 1.

**Table 1 Correspondence table between the first request and the first information**

| First processing | First information | Manner of obtaining the first information based on the first request |
|---|---|---|
| Algorithm selection | Input and output of the AI model | 1. Obtain based on mathematical problem modeling mapping performed on the service description and/or data capability. |
| | | The service description can be mapped to an output and a candidate input set, while the data capability can be mapped to a specified input and an available label set. |
| | | a) Self-evolution request. A model structure, an input, and an output can be adjusted. |
| | | b) AI inference service request. A device for inference is restricted to the second device, but the second device does not have an AI model. |
| | | 2. Determine based on a defined AI model |
| | | a) Self-evolution request. A model structure cannot be changed. |
| | | b) AI inference service request. A device for inference is restricted to the second device, and the second device uses an existing model for inference. |
| | AI training algorithm | 1. Self-evolution request. The device for training is restricted to the second device: |
| | | The AI training algorithm is determined based on a training algorithm supported by an AI capability, a training latency in the first quality of service, computing power, and a result of mathematical problem modeling mapping performed on the service description. |
| | | 2. Self-evolution request. The device for training is not the second device: |
| | | The AI training algorithm is determined based on a training algorithm supported by a candidate training device in a network, a training latency in the first quality of service, computing power of the candidate training device, and a result of mathematical problem modeling mapping performed on the service description. |
| | AI technology category | 1. Determine based on mathematical problem modeling mapping performed on the service description. |
| | | 2. Consistent with a technology category of an AI model if the AI model is specified. |
| | Identification information of the AI model | 1. Specified by the first request, that is, indicated by the algorithm capability. |
| | | 2. Obtain through mapping after analyzing a service action and a usage scenario in the service description. |
| | | 3. Consistent with an identity (Identity, ID) of an AI model if the AI model is specified. |
| | Capability category of the AI model | 1. Determine based on mathematical problem modeling mapping performed on the service description. |
| | | 2. Consistent with a capability category of an AI model if the AI model is specified. |
| | Usage scenario | Determine based on a usage scenario in the service description. |
| Computin g power selection | Network entity for inference | 1. AI inference service request. A device for inference is not restricted to the second device. |
| | | Step 1: Based on the input and the output of the AI model parsed from the service description, based on AI model input obtainability, obtain a candidate set. |
| | | Step 2: Based on an inference latency in quality of service, roughly determine a candidate set. |
| | | Step 3: Obtain an intersection of the two sets. |
| | | 2. Self-evolution service. It is the second device. |
| | Network entity for training | Step 1: Based on the input and the output (labels) of the AI model parsed from the service description, based on AI model input and label availability, obtain a candidate set. |
| | | Step 2: Based on a training latency in quality of service, roughly determine a candidate set. |
| | | Step 3: Obtain an intersection of the two sets. |
| Determine a manner of obtaining data used in the first request | Obtaining manner | 1. Self-evolution request. The device for training is restricted to the second device. |
| | | Based on the training latency and the data capability of the second device, it is determined whether sample data is obtained in real time or existing data is used. |
| | | 2. Self-evolution request. The device for training is not restricted to the second device. |
| | | Based on the training latency and a sample data collection and processing latency of a candidate training device, it is determined whether sample data is obtained in real time or existing data is used. |
| | | 3. Obtain in real time in the case of the AI inference service request. |
| Determine quality of service | Computing power quality-training | 1. Directly given based on the training latency in the first quality of service in the first request. |
| | latency | 2. Based on the result of mathematical problem modeling mapping performed on the service description in the first request, an inference latency configuration of a similar history problem is found as the inference latency. |
| | Computing power quality-inference | 1. Directly given based on the inference latency in the first quality of service in the first request. |
| | latency | 2. Based on the result of mathematical problem modeling mapping performed on the service description in the first request, an inference latency configuration of a similar history problem is found as the inference latency. |
| | | 3. Based on a network execution process, inference constraint is deduced. For example, based on a time difference between beam measurement and beam measurement report, the inference latency for AI beam prediction is deduced. |
| | Algorithm quality-AI classification problem evaluation metric: precision | 1. Directly given based on an algorithm indicator in the quality of service in the first request. |
| | | 2. If not given, find the most lenient indicator of indicators of a similar history problem based on the result of mathematical problem modeling mapping performed on the service description in the first request. |
| | Algorithm quality-AI regression problem evaluation metric: mean absolute error | |
| | | 3. If not given, find an average indicator of indicators of a similar history problem based on the result of mathematical problem modeling mapping performed on the service description in the first request. |
| | Algorithm quality-reinforcement learning evaluation metric: latency reduction ratio | |
| | Algorithm quality-reinforcement learning evaluation metric: throughput improvement ratio | |
| | Data quality-prediction time interval | |

The first information corresponding to different requests is illustrated below with examples.

Case 1: The AI model upgrade request is physical layer-beam management-top1 best beam prediction. Case 2: AI inference service request-protocol stack module selection. The comparison between the two cases is shown in Table 2.

**Table 2 Comparison between the first information corresponding to the two requests**

| | | Case 1 | Case 2 |
|---|---|---|---|
| AI service category | | Model training | Model training |
| Algorithm | Input and output of the AI model | Problem modeling table 1 | Problem modeling table 2 |
| | AI training algorithm | Supervised learning | Reinforcement learning |
| | AI technology category | Classification problem | Classification problem |
| Computing power | Device selection (inference) | UE | OAM calculation unit |
| | Device selection (training) | Core network calculation unit | OAM calculation unit |
| Manner of obtaining used data | Data obtaining manner | Real-time obtaining | Real-time obtaining |
| Second quality of service | Computing power quality-training latency | Hour level | Week level |
| | Computing power quality-inference latency | Millisecond level | Second level |
| | Algorithm quality-evaluation metric: precision | 90% | N/A |
| | Algorithm quality-evaluation metric: mean absolute error | N/A | N/A |
| | Algorithm quality-reinforcement learning evaluation metric: latency reduction ratio | N/A | 10% |
| | Algorithm quality-reinforcement learning evaluation metric: throughput improvement ratio | N/A | 0% |
| | Data quality-prediction time interval | 40 ms | N/A |

AI problem modeling is determined based on an AI service request, and a relationship between the AI service request and problem modeling is obtained by querying a predefined template. Details are shown in Table 3.

**Table 3 Table of correspondence between an AI service request and an input and an output of an AI model**

| Serial number | AI service request | Input | Output |
|---|---|---|---|
| 1 | Physical layer-beam management- prediction of the strongest 4 beams (spatial domain) | Quality of some beams measured at a current moment | Quality of all beams at a current moment |
| 2 | Physical layer-beam management- prediction of the strongest 4 beams (time domain) | All or some beams measured in history | Quality of all beams in the next 40 ms |
| 3 | Physical layer-channel state information (Channel State Information, CSI) compression (terminal) | Channel eigenvector | Compressed bitstream |
| 4 | Physical layer-CSI compression (terminal) | Bit rate | Recovered channel eigenvector |
| 5 | Physical layer-CSI prediction | Channel impulse responses in all or some bands measured in history | Full-band channel impulse response in the next 10 ms |
| 6 | Mobility-L3 RSRP prediction | Channel quality of a serving cell and an adjacent cell measured in history | Channel quality of a serving cell and an adjacent cell in the next 1s |
| 7 | Core network-traffic prediction | Service traffic measured in history | Service traffic in the next 15 minutes |
| 8 | Protocol stack module selection | a) Candidate protocol stack module | Selected protocol stack module |
| | | b) Relevant history key performance indicator (Key Performance Indicator, KPI) and corresponding protocol stack module set | |
| 9 | Configuration parameter optimization | a) Candidate parameter configuration set | Parameter configuration set |
| | | b) Relevant history KPI and corresponding parameter configuration set | |

Detailed configuration information, such as a prediction time interval, is obtained through AI service action configuration.

The eighth example and the ninth example in Table 3 correspond to problem modeling table 1 and problem modeling table 2 in Table 2 respectively.

Optionally, in at least one embodiment of the present application, the determining, by the first device, an auxiliary device that completes the first request includes one of the following:
determining, by the first device based on second information, whether at least one of a first condition, a second condition, and a third condition is satisfied, where the second information includes the first request and/or third information from the third device; and
determining, based on a result of whether at least one of the first condition, the second condition, and the third condition is satisfied, the auxiliary device that completes the first request;
where the third information is AI model version update information, and the third information includes at least one of the following: a version update timestamp, a pre-evaluation result, version information, AI model structure indication information, and AI model usage information.

The first condition is that an AI data capability of AI capabilities that the second device can provide satisfies a usage condition of a target AI model; the second condition is that AI computing power of AI capabilities that the second device can provide satisfies a usage condition of the target AI model; and the target AI model is specified by the second device or determined based on the third information.

The third condition is that the third device can provide an AI model that satisfies the first request.

Further, the determining, based on a result of whether at least one of the first condition, the second condition, and the third condition is satisfied, the auxiliary device that completes the first request includes at least one of the following:
D11: When the first condition, the second condition, and the third condition are satisfied, determine that the auxiliary device that completes the first request is the third device.

That is, the AI data capability and the AI computing power of the AI capabilities that the second device can provide both satisfy the usage condition of the target AI model, and the third device can further provide an AI model that satisfies the first request. In this case, there is no need to train the model through the fourth device, and the AI model that satisfies the needs only needs to be obtained directly from the third device.

D12: When the third condition is not satisfied, determine that the auxiliary device that completes the first request is the fourth device.

That is, when the first device knows that the third device cannot provide an AI model that satisfies the first request, it indicates that the AI model needs to be trained, and processing related to model training needs to be directly requested from the fourth device, without the need to request the AI model from the third device.

D13: When the third condition is satisfied and the first condition is not satisfied, and/or the third condition is satisfied and the second condition is not satisfied, determine that the auxiliary device that completes the first request is the third device and the fourth device.

Optionally, for example, if the third device can provide an AI model that satisfies the first request and the AI data capability of the AI capabilities that the second device can provide does not satisfy the usage condition of the target AI model, it indicates that only data needs to be obtained. A structure of the model provided by the third device may be used. In this case, the third device and the fourth device need to be configured to complete the first request. For example, if the third device can provide an AI model that satisfies the first request and the AI computing power of the AI capabilities that the second device can provide does not satisfy the usage condition of the target AI model, it indicates that only computing power needs to be obtained. A structure of the model provided by the third device may be used. In this case, the third device and the fourth device need to be configured to complete the first request. For example, if the third device can provide an AI model that satisfies the first request and neither the AI data capability nor the AI computing power of the AI capabilities that the second device can provide satisfies the usage condition of the target AI model, it indicates that data and computing power need to be obtained. A structure of the model provided by the third device may be used. In this case, the third device and the fourth device need to be configured to complete the first request.

It should be noted that the third condition is determined based on at least one of model existence of the second device, the update indication information, the third information, a capability upper limit of the fourth device, a fourth condition, and a fifth condition. Optionally, the third condition includes one of the following:
D21: No AI model exists on the second device, and the update indication information in the first request allows a structure of an AI model to be updated.
D22: The update indication information in the first request allows a structure of an AI model to be updated, and the fourth condition is satisfied.

It should be noted that the fourth condition is that an AI model version update time of the third information is later than a time when an AI model already exists on the second device.

D23: The update indication information in the first request only allows a parameter of an AI model to be updated, and the fourth condition and the fifth condition are both satisfied.

It should be noted that the fifth condition is that a structure of an existing AI model of the second device in the first request matches a structure of a model in the third information.

D24: An existing AI model of the second device does not satisfy the first condition and cannot be implemented through a data request of the fourth device, and the update indication information in the first request allows a structure of an AI model to be updated.

D25: An existing AI model of the second device does not satisfy the first condition and cannot be implemented through a data request, the update indication information in the first request does not allow a structure of an AI model to be updated, and the fifth condition is satisfied.

D26: The first request includes a model identifier of a requested AI model, for example, the model identifier is indicated by a model ID.

For example, when no model exists in the AI capability of the first request or the model needs to be updated, the third device needs to output the candidate AI model and the model information of the candidate AI model, including the candidate AI model, usage information of the candidate AI model, and a pre-evaluation result corresponding to the candidate AI model in the following specific cases:
Case 1: Self-evolution request. A model structure needs to be updated.
Case 2: Self-evolution request. Only a model parameter needs to be updated, but is not updated through real-time training (this may be implemented without the fourth device).
Case 3: Self-evolution request. Only a model parameter needs to be updated, and is updated through real-time training.
Case 4: Inference service request. An inference device is restricted to the second device, and the second device does not have a model yet.

For example, when the data capability of the AI capabilities of the first request cannot satisfy a data condition used by the model, or the computing power cannot satisfy a computing power condition used by the model, the fourth device needs to output a splitting result of the first request, and specifically splits the first request into a data request, a computing power request, an algorithm request, and a connection request in the following specific cases. A data function receives the data request and helps the second device expand data items that can be collected or collect a larger range of data for self-evolution training. A computing power function receives the computing power request and helps execute inference service code or self-evolution training code of the first request. An algorithm function receives the algorithm request to configure a training node and control a training process, for example, for federated learning. A connection function receives the connection request, so that sample data is transmitted between the data function and the computing function, an updated model parameter or gradient is transmitted between computing nodes, and a trained model is transmitted from the training node to the second device to complete model upgrade.

Case 1: An AI data collection capability of the second device cannot satisfy the data condition used by the model, and a network configuration needs to be adjusted so that the AI data capability can satisfy the needs of inference or self-evolution training.

Case 2: An AI data collection range of the second device is limited, and a network needs to send a larger range of data collected by other UEs or other network elements, to perform self-evolution training.

Case 3: The computing power of the second device cannot satisfy the computing power condition used by the model, and another network element is required to perform an inference or self-evolution training service.

Optionally, in a case that the auxiliary device includes the fourth device, the method further includes:
in a case that computing power of the second device cannot satisfy a usage condition of a target AI model, obtaining, by the first device, an AI model that has been provided by the second device and model information of the AI model, or transferring, by the first device, the first information to the third device and obtaining the candidate AI model and the model information of the candidate AI model from the third device, where the target AI model is specified by the second device or determined based on third information from the third device, and the third information is AI model version update information; and
transferring, by the first device, target information to the fourth device, so that the fourth device determines, based on the target information, a first model used for training or inference, where the target information includes the AI model that has been provided by the second device and the model information of the AI model, or the target information includes the candidate AI model and the model information of the candidate AI model.

Optionally, a specific implementation of splitting, by the fourth device, the first request into a target request based on the first information includes at least one of the following:
D31: in a case that a data capability of the second device in the first request cannot satisfy a usage condition of a target AI model, splitting the first request into at least one of a data request and a connection request;
D32: in a case that computing power of the second device in the first request cannot satisfy a usage condition of a target AI model, splitting the first request into at least one of a computing power request and a connection request; and
D33: in a case that an AI training algorithm in the first information is a distributed training algorithm, splitting the first request into at least one of a computing power request, an algorithm request, and a connection request.

Below, when the first information does not pass through the third device, and only passes through the fourth device (that is, when the model structure of the AI capability of the first request does not need to be updated and it is hoped to use real-time data for model update, the data capability cannot satisfy the data condition used by the model, or the computing power cannot satisfy the computing power condition used by the model. In this case, only the service of the fourth device is required), a specific implementation of the present application is illustrated as follows:
Specific application case 1: The first request is a self-evolution request, the training device is restricted to the second device that has a basic model, and a structure of the model is restricted to not change. Training data is requested from the network (configuration).

A specific procedure includes:
Step S11: The first device receives the first request, where the AI capabilities that the second device can provide include a supportable AI basic model library and include update indication information, and determines, based on the update indication information, that a structure of a model cannot be changed and downloading a new model parameter from outside is not accepted.
Step S12: The first device determines the first information.

Because the model has been determined from the first request, the algorithm chooses to assign a value directly from the first request without additional processing. Because the device for training has also been specified, there is no need for additional processing in computing power selection.

Specifically, in this case, a correspondence table of how each item in the first information is determined based on the first request is shown in Table 4.

**Table 4 Correspondence table between the first request and the first information**

| First processing | First information | Manner of obtaining the first information based on the first request |
|---|---|---|
| Algorithm selection | Input and output of the AI model | 1. Determine based on a defined AI model: |
| | | Self-evolution request. A model structure cannot be changed. |
| | AI training algorithm | 1. Self-evolution request. The device for training is restricted to the second device. |
| | | The AI training algorithm is determined based on a training algorithm supported by an AI capability, a training latency in the first quality of service, computing power, and a result of mathematical problem modeling mapping performed on the service description. |
| | AI technology category | Consistent with a technology category of an AI model if the AI model is specified. |
| | Identification information of the AI model | Consistent with an ID of an AI model if the AI model is specified. |
| | Capability category of the AI model | Consistent with a capability category of an AI model if the AI model is specified. |
| | Usage scenario | Determine based on a usage scenario in the service description. |
| Computing power selection | Network entity for inference | Second device |
| | Network entity for training | Second device |
| Determine a manner of obtaining data used in the first request | Obtaining manner | 1. Self-evolution request. The device for training is restricted to the second device. |
| | | Based on the training latency and the data capability of the second device, it is determined whether sample data is obtained in real time or existing data is used. |
| Determine quality of service | Computing power quality-training latency | 1. Directly given based on the training latency in the first quality of service in the first request. |
| | | 2. Based on the result of mathematical problem modeling mapping performed on the service description in the first request, an inference latency configuration of a similar history problem is found as the inference latency. |
| | Computing power quality-inference latency | 1. Directly given based on the inference latency in the first quality of service in the first request. |
| | | 2. Based on the result of mathematical problem modeling mapping performed on the service description in the first request, an inference latency configuration of a similar history problem is found as the inference latency. |
| | | 3. Based on a network execution process, inference constraint is deduced. For example, based on a time difference between beam measurement and beam measurement report, the inference latency for AI beam prediction is deduced. |
| | Algorithm quality-AI classification problem evaluation metric: precision | 1. Directly given based on an algorithm indicator in the quality of service in the first request. |
| | | 2. If not given, find the most lenient indicator of indicators of a similar history problem based on the result of mathematical problem modeling mapping performed on the service description in the first request. |
| | Algorithm quality-Al regression problem evaluation metric: mean absolute error | |
| | | 3. If not given, find an average indicator of indicators of a similar history problem based on the result of mathematical problem modeling mapping performed on the service description in the first request. |
| | Algorithm quality-reinforcement learning evaluation metric: latency reduction ratio | |
| | Algorithm quality-reinforcement learning evaluation metric: throughput improvement ratio | |
| | Data quality-prediction time interval | |

Step S13: The first device determines that the auxiliary device is the fourth device.

Specifically, the first condition is that an AI data capability of AI capabilities that the second device can provide satisfies a usage condition of a target AI model. Since the first request includes a data capability request, the first condition is not satisfied in this case. The second condition is that AI computing power of AI capabilities that the second device can provide satisfies a usage condition of the target AI model. In this case, the second condition is satisfied. The third condition is that the third device can provide an AI model that satisfies the first request. Since the update indication indicates that a structure of a model cannot be changed and downloading a new model parameter from outside is not allowed, the third condition is not satisfied in this case.

Based on the above determination, it is determined that the auxiliary device is the fourth device.

Step S14: The first device sends the first information to the fourth device.

Step S15: The fourth device receives the first information and performs workflow splitting on the first request.

Specifically, the present application can be divided into two cases:
Case 1: If the manner of obtaining data used in the first request in the first information is real-time obtaining, the workflow is only split into a data request.

Specifically, the fourth device determines data collection items based on the input and output of the AI model in the first information, and sends the data input and a label collection requirement (that is, a data request) to the data function. After receiving the data input and the label collection requirement, the data function performs corresponding configuration so that the second device can complete the training.

Case 2: If the manner of obtaining data used in the first request in the first information is static obtaining, the workflow is split into a data request and a connection request.

Specifically, the fourth device sends the data input, a label format, and a quantity requirement (that is, a data request) to the data function. The fourth device determines the connection requirement (that is, a connection request) based on the transmission content and a latency, and sends the connection request to the connection function.

The data function finds a corresponding sample library based on the data request. The connection function establishes a connection link between the data function and the second device based on the connection request, and sends the sample library to the second device for model training.

Specific application case 2: The first request is a self-evolution request. The data capability and the computing power of the second device cannot match the model training condition, and another device is required for training. The AI capability of the second device includes training a basic model and the model structure is restricted to not change, and the third device does not have an updated model with the same structure.

A specific procedure includes:
Step S21: The first device receives the first request, where the AI capabilities that the second device can provide include a supportable AI basic model library and include update indication information, and determines, based on the update indication information, that a structure of a model cannot be changed.
Step S22: The first device determines the first information.

Because the model has been determined from the first request, the algorithm chooses to assign values directly from the first request for most content without additional processing. Since the training device needs to be additionally selected, the AI training algorithm needs to be determined based on the candidate training device.

Specifically, in this case, a correspondence table of how each item in the first information is determined based on the first request is shown in Table 5.

**Table 5 Correspondence table between the first request and the first information**

| First processing | First information | Manner of obtaining the first information based on the first request |
|---|---|---|
| Algorithm selection | Input and output of the AI model | Same as those of a model in an AI capability that the second device can provide. |
| | AI training algorithm | 1. Self-evolution request. The device for training is not the second device. |
| | | The AI training algorithm is determined based on a training algorithm supported by a candidate training device in a network, a training latency in the first quality of service, computing power of the candidate training device, and a result of mathematical problem modeling mapping performed on the service description. |
| | AI technology category | Same as those of a model in an AI capability that the second device can provide. |
| | Identification information of the AI model | Same as those of a model in an AI capability that the second device can provide. |
| | Capability category of the AI model | Same as those of a model in an AI capability that the second device can provide. |
| | Usage scenario | Determine based on a usage scenario in the service description. |
| Computing power selection | Network entity for inference | Second device |
| | Network entity for training | Step 1: Based on the input and the output (labels) of the AI model parsed from the service description, based on AI model input and label availability, obtain a candidate set. |
| | | Step 2: Based on a training latency in quality of service, roughly determine a candidate set. |
| | | Step 3: Obtain an intersection of the two sets. |
| Determine a manner of obtaining data used in the first request | Obtaining manner | Self-evolution request. The device for training is not restricted to the second device. |
| | | Based on the training latency and a sample data collection and processing latency of a candidate training device, it is determined whether sample data is obtained in real time or existing data is used. |
| Determine quality of service | Computing power quality-training latency | 1. Directly given based on the training latency in the first quality of service in the first request. |
| | | 2. Based on the result of mathematical problem modeling mapping performed on the service description in the first request, an inference latency configuration of a similar history problem is found as the inference latency. |
| | Computing power quality-inference latency | 1. Directly given based on the inference latency in the first quality of service in the first request. |
| | | 2. Based on the result of mathematical problem modeling mapping performed on the service description in the first request, an inference latency configuration of a similar history problem is found as the inference latency. |
| | | 3. Based on a network execution process, inference constraint is deduced. For example, based on a time difference between beam measurement and beam measurement report, the inference latency for AI beam prediction is deduced. |
| | Algorithm quality-AI classification problem evaluation metric: precision | 1. Directly given based on an algorithm indicator in the quality of service in the first request. |
| | | 2. If not given, find the most lenient indicator of indicators of a similar history problem based on the result of mathematical problem modeling mapping performed on the service description in the first request. |
| | Algorithm quality-AI regression problem evaluation metric: mean absolute error | |
| | | 3. If not given, find an average indicator of indicators of a similar history problem based on the result of mathematical problem modeling mapping performed on the service description in the first request. |
| | Algorithm quality-reinforcement learning evaluation metric: latency reduction ratio | |
| | Algorithm quality-reinforcement learning evaluation metric: throughput improvement ratio | |
| | Data quality-prediction time interval | |

Step S23: The first device determines that the auxiliary device is the fourth device.

Specifically, the first condition is that an AI data capability of AI capabilities that the second device can provide satisfies a usage condition of the target AI model. In this case, the first condition is not satisfied. The second condition is that AI computing power of AI capabilities that the second device can provide satisfies a usage condition of the target AI model. In this case, the second condition is not satisfied. The third condition is that the third device can provide an AI model that satisfies the first request, and the model version update time of the third device is not later than the time when the AI model already exists on the second device. In this case, the third condition is not satisfied.

Based on the above determination, it is determined that the auxiliary device is the fourth device.

Step S24: The first device sends the first information to the fourth device.

Step S25: The fourth device receives the first information and performs workflow splitting on the first request.

Specifically, the present application can be divided into the following cases:
Case 1: If the manner of obtaining data used in the first request in the first information is real-time obtaining, the workflow is split into a data request, a computing power request, and a connection request.

Specifically, the fourth device determines data collection items based on the input and output of the AI model in the first information, and sends the data input and a label collection requirement (a data request) to the data function. A training latency requirement and model training execution code (a computing power request) are sent to the computing power function. Based on a sample transmission quality level and latency and a transmission quality level and latency of model training execution code, connection requirements (connection requests) are determined respectively, and the connection requests are sent to the connection function.

After receiving the data request, the data function performs corresponding configuration so that the second device can collect a sample input and label data. The data function performs data annotation on the data collected by the second device to generate a real-time sample set. The computing function receives the computing power request from the fourth device, obtains real-time samples from the data function, and executes model training instruction code. After receiving the connection request, the connection function is configured to:
establish a link between the fourth device and the computing device for transmitting model training execution code;
establish a link between the second device and the data function for transmitting real-time collected data;
establish a link between the data function and the computing device for transmitting real-time sample sets; and
establish a link between the computing device and the second device for transmitting the trained model.

Case 2: If a data source category of the first information is static obtaining, the workflow is split into a data request, a connection request, and a computing power request.

Specifically, the fourth device determines a sample data format based on the input and output of the AI model in the first information, and sends the data input and a label format requirement (a data request) to the data function. A training latency requirement and model training execution code (a computing power request) are sent to the computing power function. Based on a sample transmission quality level and latency and a transmission quality level and latency of model training execution code, connection requirements (connection requests) are determined respectively, and the connection requests are sent to the connection function.

After receiving the data request, the data function finds a corresponding static sample set. The computing function receives the computing power request from the fourth device, obtains real-time samples from the data function, and executes model training instruction code. After receiving the connection request, the connection function is configured to:
establish a link between the fourth device and the computing device for transmitting model training execution code;
establish a link between the data function and the computing device for transmitting static sample sets; and
establish a link between the computing device and the second device for transmitting the trained model.

Specific application case 3: The first request is an AI inference service request, an inference device is restricted to the second device that has a basic model, a structure of the model is restricted to not change, and downloading a new model parameter from the third device is not applied for or is not allowed. Inference data configuration is requested from the network.

Step S31: The first device receives the first request, where the AI capabilities that the second device can provide include a supportable AI basic model library and include update indication information, and determines, based on the update indication information, that a structure of a model cannot be changed.

Step S32: The first device determines the first information.

Because the model has been determined from the first request, the algorithm chooses to assign a value directly from the first request without additional processing. Because the device for training has also been specified, there is no need for additional processing in computing power selection.

Specifically, in this case, a correspondence table of how each item in the first information is determined based on the first request is shown in Table 6.

**Table 6 Correspondence table between the first request and the first information**

| First processing | First information | Manner of obtaining the first information based on the first request |
|---|---|---|
| Algorithm selection | Input and output of the AI model | 1. Determine based on a defined AI model. |
| | | AI inference service request. A device for inference is restricted to the second device, and the second device uses an existing model for inference. |
| | AI training algorithm | 1. Self-evolution request. The device for training is restricted to the second device. |
| | | The AI training algorithm is determined based on a training algorithm supported by an AI capability, a training latency in the first quality of service, computing power, and a result of mathematical problem modeling mapping performed on the service description. |
| | AI technology category | Consistent with a technology category of an AI model if the AI model is specified. |
| | Identification information of the AI model | Consistent with an ID of an AI model if the AI model is specified. |
| | Capability category of the AI model | Consistent with a capability category of an AI model if the AI model is specified. |
| | Usage scenario | Determine based on a usage scenario in the service description. |
| Computing power selection | Network entity for inference | Second device |
| | Network entity for training | Second device |
| Determine a manner of obtaining data used in the first request | Obtaining manner | Obtain in real time in the case of the AI inference service request. |
| Determine quality of service | Computing power quality-training latency | 1. Directly given based on the training latency in the first quality of service in the first request. |
| | | 2. Based on the result of mathematical problem modeling mapping performed on the service description in the first request, an inference latency configuration of a similar history problem is found as the inference latency. |
| | Computing power quality-inference latency | 1. Directly given based on the inference latency in the first quality of service in the first request. |
| | | 2. Based on the result of mathematical problem modeling mapping performed on the service description in the first request, an inference latency configuration of a similar history problem is found as the inference latency. |
| | | 3. Based on a network execution process, inference constraint is deduced. For example, based on a time difference between beam measurement and beam measurement report, the inference latency for AI beam prediction is deduced. |
| | Algorithm quality-Al classification problem evaluation metric: precision | 1. Directly given based on an algorithm indicator in the quality of service in the first request. |
| | | 2. If not given, find the most lenient indicator of indicators of a similar history problem based on the result of mathematical problem modeling mapping performed on the service description in the first request. |
| | Algorithm quality-AI regression problem evaluation metric: mean absolute error | |
| | | 3. If not given, find an average indicator of indicators of a similar history problem based on the result of mathematical problem modeling mapping performed on the service description in the first request. |
| | Algorithm quality-reinforcement learning evaluation metric: latency reduction ratio | |
| | Algorithm quality-reinforcement learning evaluation metric: throughput improvement ratio | |
| | Data quality-prediction time interval | |

Step S33: The first device determines that the auxiliary device is the fourth device.

Specifically, the first condition is that an AI data capability of AI capabilities that the second device can provide satisfies a usage condition of the target AI model. In this case, the first condition is not satisfied. The second condition is that AI computing power of AI capabilities that the second device can provide satisfies a usage condition of the target AI model. In this case, the second condition is satisfied. The third condition is that the third device can provide an AI model that satisfies the first request. The second device has its own model and has not applied for or is not allowed to download a new model parameter from the third device. In this case, the third condition is not satisfied.

Based on the above determination, it is determined that the auxiliary device is the fourth device.

Step S34: The first device sends the first information to the fourth device.

Step S35: The fourth device receives the first information and performs workflow splitting on the first request.

Specifically, in the present application case, because the manner of obtaining data used in the first request in the first information is real-time obtaining, the workflow is only split into a data request.

The fourth device determines data collection items based on the input and output of the AI model in the first information, and sends a data collection requirement (a data request) to the data function. After receiving the data collection requirement, the data function performs corresponding configuration so that the data capability of the second device matches the data condition used for model inference, thereby completing model inference.

Optionally, in at least one embodiment of the present application, in a case that the auxiliary device includes the third device, the method further includes:
obtaining, by the first device, the candidate AI model and the model information of the candidate AI model transferred by the third device;
determining, by the first device, second model information based on the candidate AI model and the model information of the candidate AI model; and
transferring, by the first device, the second model information to the second device.

It should be noted that the model information includes at least one of the following:
an AI model running image, model usage information, and a pre-evaluation result corresponding to the model.

Further, the model usage information may include at least one of the following: a model ID, an AI model data interface, a data preprocessing method, a model parameter quantity, a model calculation quantity, a model storage size, a typical inference latency, a typical usage scenario, and a typical usage scenario ID.
E11: Model ID.
E12: AI model data interface.

The model data interface includes an input data interface and an output data interface, and represents a physical meaning corresponding to each input of the AI model.

Optionally, the model data interface includes but is not limited to one of the following:
E121: Data dimension quantity.
E122: Quantity of each dimension.
E123: Meaning of each dimension.

An example is time, frequency, beam, and key performance indicator (Key Performance Indicator, KPI).
E124: Interval of each dimension.
E13: Data preprocessing method.
E14: Model parameter quantity.
E15: Model calculation quantity.

For example, the model calculation quantity can include: floating point operations per second (Floating Point Operations per Second, FLOPS).
E16: Model storage size.
E17: Typical inference latency.

The typical inference latency is used to represent that several categories of inference latencies configured by a computing unit can be supported, and includes device configuration categories and corresponding latencies. The device configuration categories include but are not limited to one of the following:
E171: Location of a network element computing unit, such as a terminal computing unit, a base station computing unit, a core network computing unit, and an OAM computing unit.
E172: Typical central processing unit (Central Processing Unit, CPU), graphics processing unit (Graphics Processing Unit, GPU), or neural-network processing unit (Neural-network Processing Unit, NPU) configuration.
E18: Typical usage scenario.

An example is a channel scenario and a UE mobility scenario.

### E19: Typical usage scenario ID.

Below, when the first information does not pass through the fourth device, and only passes through the third device (that is, when the data capability and the computing capability (inference and training) of the AI capabilities of the first request both satisfy the requirements, the model inference result in the AI capability does not satisfy expectations, and the third device can provide an AI model that satisfies the first request, only the service of the third device is required), a specific implementation of the present application is illustrated as follows:

Specific application case 4: The fourth device is not passed through and only the third device is passed through.

When the data capability and the computing capability (inference and training) of the AI capabilities of the first request both satisfy the requirements, the model inference result in the AI capability does not meet expectations, and the third device can provide an AI model that satisfies the first request, only the service of the third device is required.

A specific procedure includes:
Step S41: The first device receives the first request and needs to update a model of the second device.
Step S42: The first device determines the first information.

Specifically, in this case, a correspondence table of how each item in the first information is determined based on the first request is shown in Table 7.

**Table 7 Correspondence table between the first request and the first information**

| First processing | First information | Manner of obtaining the first information based on the first request |
|---|---|---|
| Algorithm selection | Input and output of the AI model | 1. Obtain based on mathematical problem modeling mapping performed on the service description and/or data capability. |
| | | The service description can be mapped to an output and a candidate input set, while the AI data capability can be mapped to a specified input and an available label set. |
| | | a) Self-evolution request. A model structure, an input, and an output can be adjusted. |
| | | 2. Determine based on a defined AI model. |
| | | a) Self-evolution request. A model structure cannot be changed. |
| | Specified model structure | The second device has specified the AI model structure. |
| | AI training algorithm | N/A |
| | AI technology category | 1. Determine based on a data modeling problem identified based on service description analysis. |
| | | 2. Consistent with a technology category of an AI model if the AI model is specified. |
| | Identification information of the AI model | N/A |
| | Capability category of the AI model | 1. Determine based on a data modeling problem identified based on the service description analysis. |
| | | 2. Consistent with a capability category of an AI model if the AI model is specified. |
| | Usage scenario | Determine based on a usage scenario in the service description. |
| Computing power selection | Network entity for inference | Second device |
| | Network entity for training | N/A |
| Determine a manner of obtaining data used in the first request | Obtaining manner | N/A |
| Determine quality of service | Computing power quality-training latency | N/A |
| | Computing power quality-inference latency | 1. Directly given based on the inference latency in the quality of service in the first request. |
| | | 2. Based on the result of mathematical problem modeling mapping performed on the service description in the first request, an inference latency configuration of a similar history problem is found as the inference latency. |
| | | 3. Based on a network execution process, inference constraint is deduced. For example, based on a time difference between beam measurement and beam measurement report, the inference latency for AI beam prediction is deduced. |
| | Algorithm quality-Al classification problem evaluation metric: precision | 1. Directly given based on an algorithm indicator in the quality of service in the first request. |
| | | 2. If not given, find the most lenient indicator of indicators of a similar history problem based on a mathematical problem mapped by the service description. |
| | Algorithm quality-Al regression problem evaluation metric: mean absolute error | |
| | | 3. If not given, find an average indicator of indicators of a similar history problem based on a mathematical problem mapped by the service description. |
| | Algorithm quality-reinforcement learning evaluation metric: latency reduction ratio | |
| | Algorithm quality-reinforcement learning evaluation metric: throughput improvement ratio | |
| | Data quality-prediction time interval | |

Step S43: The first device determines that the auxiliary device is the third device.

Specifically, the first condition is that an AI data capability of AI capabilities that the second device can provide satisfies a usage condition of the target AI model. In this case, the first condition is satisfied. The second condition is that AI computing power of AI capabilities that the second device can provide satisfies a usage condition of the target AI model. In this case, the second condition is satisfied. The third condition is that the third device can provide an AI model that satisfies the first request. In this case, the third condition is satisfied.

Based on the above determination, it is determined that the auxiliary device is the third device.

Step S44: The first device sends the first information to the third device.

Step S45: The third device receives the first information and determines a candidate AI model.

A specific implementation includes the following cases:
Case 1: If the structure of the AI model is limited, and a version update time of a model of the same structure on the third device is later than the time when the AI model already exists on the second device.

Specifically, a candidate model set is determined based on the AI model structure, the input and output of the AI model, the technology category, the AI capability category, the usage scenario, and the second quality of service in the first information.

Case 2: If the structure of the AI model is not limited, and a model version update time of the third device is later than the time when the AI model already exists on the second device.

Specifically, a candidate model set is determined based on the input and output of the AI model, the technology category, the AI capability category, the usage scenario, a computing power selection result, and the second quality of service in algorithm selection in the first information.

Because the structural change of the model leads to change in the calculation amount of the model, balance is required with reference to the capabilities of the computing power device.

Step S46: The third device sends the candidate AI model and the model information of the candidate AI model to the first device.

Step S47: The first device determines, based on the candidate AI model and the model information of the candidate AI model, a model used for updating the second device, and sends the determined model information to the second device.

For example, the first device selects, based on both the size of the model and the pre-evaluation result, the model for updating the second device.

Step S48: The first device sends the selected model to the second device to complete the self-evolution request.

Specific application case 5: The first request is a self-evolution request, the training device is restricted to the second device, and a structure of the model can be changed. A new pre-training model is downloaded from the third device. The model ID is specified in the AI algorithm capability of the second device.

A specific procedure includes:
Step S51: The first device receives the first request and needs to update a model of the second device.
Step S52: The first device determines the first information.

Specifically, in this case, a correspondence table of how each item in the first information is determined based on the first request is shown in Table 8.

**Table 8 Correspondence table between the first request and the first information**

| First processing | First information | Manner of obtaining the first information based on the first request |
|---|---|---|
| Algorithm selection | Input and output of the AI model | N/A |
| | Specified model structure | N/A |
| | AI training algorithm | N/A |
| | AI technology category | N/A |
| | Identification information of the AI model | Model ID of an AI algorithm capability in the first request |
| | Capability category of the AI model | N/A |
| | Usage scenario | Determine based on a usage scenario in the service description. |
| Computing power selection | Network entity for inference | Second device |
| | Network entity for training | N/A |
| Determine a manner of obtaining data used in the first request | Obtaining manner | N/A |
| Determine quality of service | Computing power quality-training latency | N/A |
| | Computing power quality-inference latency | N/A |
| | Algorithm quality-Al classification problem evaluation metric: precision | N/A |
| | Algorithm quality-Al regression problem evaluation metric: mean absolute error | |
| | Algorithm quality-reinforcement learning evaluation metric: latency reduction ratio | |
| | Algorithm quality-reinforcement learning evaluation metric: throughput improvement ratio | |
| | Data quality-prediction time interval | |

Step S53: The first device determines that the auxiliary device is the third device.

Specifically, the first condition is that an AI data capability of AI capabilities that the second device can provide satisfies a usage condition of the target AI model. In this case, the first condition is satisfied. The second condition is that AI computing power of AI capabilities that the second device can provide satisfies a usage condition of the target AI model. In this case, the second condition is satisfied. The third condition is that the third device can provide an AI model that satisfies the first request. Since the first request includes a model identifier of the requested AI model, the third condition is satisfied.

Based on the above determination, it is determined that the auxiliary device is the third device.

Step S54: The first device sends a result of algorithm selection in the first information to the third device.

Step S55: The third device receives the first information and determines a candidate AI model set.

Specifically, the candidate AI model set is determined based on an AI model ID and a usage scenario in the first information.

Step S56: The third device sends the candidate AI model and the model information of the candidate AI model to the first device.

Step S57: The first device determines, based on the candidate AI model and the model information of the candidate AI model, a model used for updating the second device, and sends the determined model information to the second device.

For example, the first device selects, based on both the size of the model and the pre-evaluation result, the model for updating the second device.

Step S58: The first device sends the selected model to the second device to complete the self-evolution request.

Below, when the first information passes through both the third device and the fourth device (that is, when the third device can provide an AI model that satisfies the first request, and the data capability does not match the data condition used by the model, or the computing capability does not match the computing power condition used by the model, the service of both the third device and the fourth device is required), a specific implementation of the present application is illustrated as follows:
Specific application case 6: The first request is a self-evolution request, the training device is restricted to the second device, and a structure of the model can be changed. That is, training data (or data configuration) and a new pre-training model are requested from the network.

A specific procedure includes:
Step S61: The first device receives the first request.
Step S62: The first device determines the first information.

Because the device for training has also been specified, there no need for additional processing in computing power selection.

Specifically, in this case, a correspondence table of how each item in the first information is determined based on the first request is shown in Table 9.

**Table 9 Correspondence table between the first request and the first information**

| First processing | First information | Manner of obtaining the first information based on the first request |
|---|---|---|
| Algorithm selection | Input and output of the AI model | 1. Obtain based on mathematical problem modeling mapping performed on the service description and/or data capability. |
| | | The service description can be mapped to an output and a candidate input set, while the data capability can be mapped to a specified input and an available label set. |
| | | a) Self-evolution request. A model structure, an input, and an output can be adjusted. |
| | AI training algorithm | 1. Self-evolution request. The device for training is restricted to the second device. |
| | | The AI training algorithm is determined based on a training algorithm supported by an AI capability, a training latency in the first quality of service, computing power, and a result of mathematical problem modeling mapping performed on the service description. |
| | AI technology category | 1. Determine based on mathematical problem modeling mapping performed on the service description. |
| | Identification information of the AI model | N/A |
| | Capability category of the AI model | 1. Determine based on mathematical problem modeling mapping performed on the service description. |
| | Usage scenario | Determine based on a usage scenario in the service description. |
| Computing power selection | Network entity for inference | Second device |
| | Network entity for training | Second device |
| Determine a manner of | Obtaining manner | 1. Self-evolution request. The device for training is restricted to the second device. |
| | | Based on the training latency and the AI data capability |
| obtaining data used in the first request | | of the second device, it is determined whether sample data is obtained in real time or existing data is used. |
| Determine quality of service | Computing power quality-training latency | 1. Directly given based on the training latency in the first quality of service in the first request. |
| | | 2. Based on the result of mathematical problem modeling mapping performed on the service description in the first request, an inference latency configuration of a similar history problem is found as the inference latency. |
| | Computing power quality-inference latency | 1. Directly given based on the inference latency in the first quality of service in the first request. |
| | | 2. Based on the result of mathematical problem modeling mapping performed on the service description in the first request, an inference latency configuration of a similar history problem is found as the inference latency. |
| | | 3. Based on a network execution process, inference constraint is deduced. For example, based on a time difference between beam measurement and beam measurement report, the inference latency for AI beam prediction is deduced. |
| | Algorithm quality-AI classification problem evaluation metric: precision | 1. Directly given based on an algorithm indicator in the quality of service in the first request. |
| | | 2. If not given, find the most lenient indicator of indicators of a similar history problem based on the |
| | Algorithm quality-AI regression problem evaluation metric: mean absolute error | result of mathematical problem modeling mapping performed on the service description in the first request. |
| | | 3. If not given, find an average indicator of indicators of a similar history problem based on the result of mathematical problem modeling mapping performed on the service description in the first request. |
| | Algorithm quality-reinforcement learning evaluation metric: latency reduction ratio | |
| | Algorithm quality-reinforcement learning evaluation metric: throughput improvement ratio | |
| | Data quality-prediction time interval | |

Step S63: The first device determines that the auxiliary device is the third device and the fourth device.

Specifically, the first condition is that an AI data capability of AI capabilities that the second device can provide satisfies a usage condition of the target AI model. In this case, the first condition is not satisfied. The second condition is that AI computing power of AI capabilities that the second device can provide satisfies a usage condition of the target AI model. In this case, the second condition is not satisfied. The third condition is that the third device can provide an AI model that satisfies the first request. Because the update indication information allows the model structure to be changed, and an available model version update time of the third device is later than the time when the AI model already exists on the second device, the third condition is satisfied.

Based on the above determination, it is determined that the auxiliary device is the third device and the fourth device.

Step S64: The first device sends the first information to the third device.

Step S65: The third device receives the first information and determines a candidate AI model set.

Specifically, the third device determines a candidate model set based on the input and output of the AI model, the technology category, the AI capability category, the usage scenario, a computing power selection result, and the second quality of service in the first information.

Because the structural change of the model leads to change in the calculation amount of the model, balance is required with reference to the capabilities of the computing power device.

Step S66: The third device sends the candidate AI model and the model information of the candidate AI model to the first device.

Step S67: The first device sends the first information, the candidate AI model, and the model information of the candidate AI model to the fourth device.

Step S68: The fourth device determines, based on the candidate AI model and the model information of the candidate AI model, a model for training (for example, both the size of the model and the pre-evaluation result are considered in model selection), and splits a workflow of the first request.

Specifically, the present application can be divided into the following cases:

Case 1: If the manner of obtaining data used in the first request in the first information is real-time obtaining, the workflow is split into a data request and a connection request.

Specifically, the fourth device determines data collection items based on the input and output of the AI model in the first information, and sends the data input and a label collection requirement (a data request) to the data function. Based on a sample transmission quality level and latency and a transmission quality level and latency of model training execution code, connection requirements (connection requests) are determined respectively, and the connection requests are sent to the connection function.

After receiving the data request, the data function performs corresponding configuration so that the second device can collect a sample input and label data. The data function performs data annotation on the data collected by the second device to generate a real-time sample set. After receiving the connection request, the connection function is configured to:
establish a link between the second device and the data function for transmitting real-time collected data.

Case 2: If a data source category of the first information is static obtaining, the workflow is split into a data request, a connection request, and a computing power request.

Specifically, the fourth device determines a sample data format based on the input and output of the AI model in the first information, and sends the data input and a label format requirement (a data request) to the data function. Based on a sample transmission quality level and latency and a transmission quality level and latency of model training execution code, connection requirements (connection requests) are determined respectively, and the connection requests are sent to the connection function.

After receiving the data request, the data function finds a corresponding static sample set. After receiving the connection request, the connection function is configured to:
establish a link between the data function and the second device for transmitting static sample sets.

It should be noted that when the model performance in the AI capability of the first request does not satisfy the requirement, an updated AI model cannot be obtained without going through the third device. Through the third device, an AI model with better performance can be obtained.

When the AI data capability or the computing power of the first request is limited, without going through the fourth device, the collaboration of the data function, the computing function, the connection function, and the computing power function cannot be implemented to complete the first request. Through the fourth device, the collaboration of the data function, the computing function, the connection function, and the computing power function can be implemented to complete the first request.

It should be noted that, the first device, the second device, the third device, and the fourth device in the embodiments of the present application are devices distinguished based on the implemented functions. In terms of physical distinguishing, the first device, the second device, the third device, and the fourth device may be distributed on the same physical device or on different physical devices.

It should be noted that at least one embodiment of the present application enables analysis of an intra-network AI service request and an AI model upgrade request of a network element within a mobile network, thereby enabling self-evolution of a network function and provision of an AI service within a network.

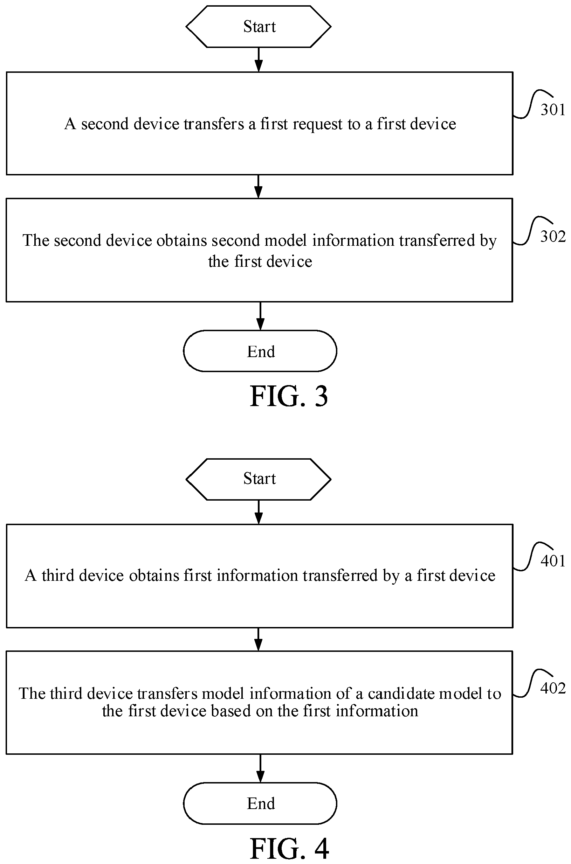

As shown in FIG. 3, an embodiment of the present application provides an artificial intelligence request analysis method, including:
Step 301: A second device transfers a first request to a first device, where a category of the first request includes an artificial intelligence AI inference service request or a self-evolution request.
Step 302: The second device obtains second model information transferred by the first device, where the second model information is determined by the first device based on a candidate AI model and model information of the candidate AI model transferred by a third device.

The first request includes at least one of the following:
a service description corresponding to an AI model;
first quality of service;
an AI capability that the second device can provide; and
update indication information, where the update indication information includes: indication information that allows a structure of an AI model to be updated and/or allows a parameter of an AI model to be updated.

It should be noted that all descriptions about the second device in the above embodiments are applicable to this embodiment of the artificial intelligence request analysis method applied to the second device, and the same technical effects can be achieved. Details are not described again herein.

As shown in FIG. 4, an embodiment of the present application provides an artificial intelligence request analysis method, including:
Step 401: A third device obtains first information transferred by a first device, where the first information is determined by the first device based on a first request of a second device, and a category of the first request includes an artificial intelligence AI inference service request or a self-evolution request.
Step 402: The third device transfers a candidate AI model and model information of the candidate AI model to the first device based on the first information.

The first request includes at least one of the following:
a service description corresponding to an AI model;
first quality of service;
an AI capability that the second device can provide; and
update indication information, where the update indication information includes: indication information that allows a structure of an AI model to be updated and/or allows a parameter of an AI model to be updated.

Optionally, the transferring, by the third device, a candidate AI model and model information of the candidate AI model to the first device based on the first information includes:
determining, by the third device, the candidate AI model based on an algorithm corresponding to the first request, computing power corresponding to the first request, and/or second quality of service in the first information; and
transferring, by the third device, the candidate AI model and the model information of the candidate AI model to the first device.

It should be noted that all descriptions about the third device in the above embodiments are applicable to this embodiment of the artificial intelligence request analysis method applied to the third device, and the same technical effects can be achieved. Details are not described again herein.

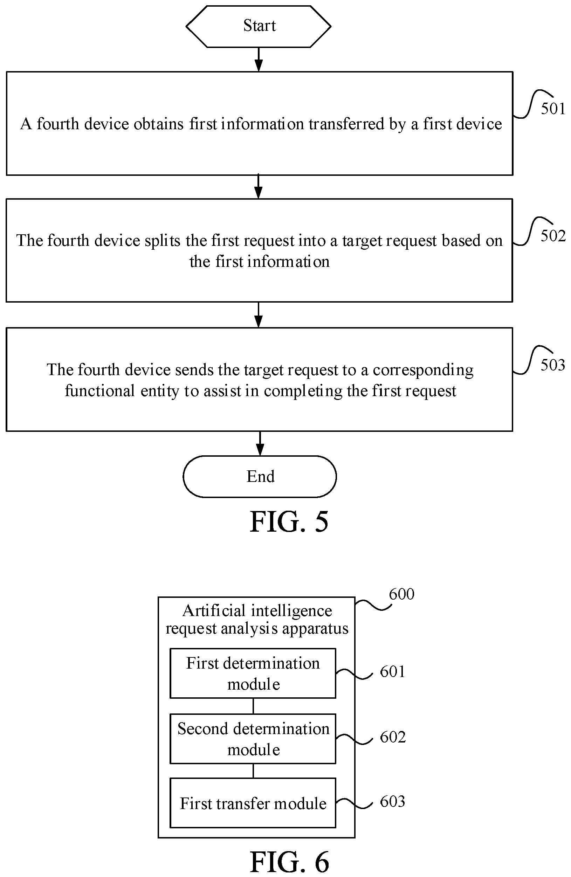

As shown in FIG. 5, an embodiment of the present application provides an artificial intelligence request analysis method, including:
Step 501: A fourth device obtains first information transferred by a first device, where the first information is determined by the first device based on a first request of a second device, and a category of the first request includes an artificial intelligence AI inference service request or a self-evolution request.
Step 502: The fourth device splits the first request into a target request based on the first information.
Step 503: The fourth device sends the target request to a corresponding functional entity to assist in completing the first request.

The target request includes: at least one of a connection request, a computing power request, an algorithm request, and a data request; and
the first request includes at least one of the following:
a service description corresponding to an AI model;
first quality of service;
an AI capability that the second device can provide; and
update indication information, where the update indication information includes: indication information that allows a structure of an AI model to be updated and/or allows a parameter of an AI model to be updated.

Optionally, the method further includes:
obtaining, by the fourth device, target information transferred by the first device, where the target information includes an AI model that has been provided by the second device and model information of the AI model, or the target information includes a candidate AI model and model information of the candidate AI model; and
determining, by the fourth device based on the target information, a first model used for training or inference.

Optionally, the first information includes at least one of the following:
an algorithm corresponding to the first request, computing power corresponding to the first request, a manner of obtaining data used in the first request, and second quality of service; and
the splitting, by the fourth device, the first request into a target request based on the first information includes at least one of the following:
   in a case that a data capability of the second device in the first request cannot satisfy a usage condition of a target AI model, splitting the first request into at least one of a data request and a connection request;
   in a case that computing power of the second device in the first request cannot satisfy a usage condition of a target AI model, splitting the first request into at least one of a computing power request and a connection request; and
   in a case that an AI training algorithm in the first information is a distributed training algorithm, splitting the first request into at least one of a computing power request, an algorithm request, and a connection request;
   where the target AI model is specified by the second device or determined based on third information from a third device, where the third information is AI model version update information, and the third device is configured to provide a candidate AI model and model information of the candidate AI model.

It should be noted that all descriptions about the fourth device in the above embodiments are applicable to this embodiment of the artificial intelligence request analysis method applied to the fourth device, and the same technical effects can be achieved. Details are not described again herein.

The artificial intelligence request analysis method provided by this embodiment of the present application may be performed by an artificial intelligence request analysis apparatus. In the embodiments of the present application, an example in which the artificial intelligence request analysis apparatus performs the artificial intelligence request analysis method is used to describe the artificial intelligence request analysis apparatus provided in the embodiments of the present application.

As shown in FIG. 6, an artificial intelligence request analysis apparatus 600 in an embodiment of the present application is applied to a first device and includes:
a first determination module 601, configured to determine first information based on a first request of a second device, where a category of the first request includes an artificial intelligence AI inference service request or a self-evolution request;
a second determination module 602, configured to determine an auxiliary device that completes the first request, where the auxiliary device is a third device and/or a fourth device; and
a first transfer module 603, configured to transfer the first information to the auxiliary device;
where the third device is configured to provide a candidate AI model and model information of the candidate AI model, the fourth device is configured to split the first request into a target request and send the target request to a corresponding functional entity to assist in completing the first request, and the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

Optionally, the second determination module 602 is configured to implement one of the following:
determining, based on second information, whether at least one of a first condition, a second condition, and a third condition is satisfied, where the second information includes the first request and/or third information from the third device; and
determining, based on a result of whether at least one of the first condition, the second condition, and the third condition is satisfied, the auxiliary device that completes the first request;
where the third information is AI model version update information, and the third information includes at least one of the following: a version update timestamp, a pre-evaluation result, version information, AI model structure indication information, and AI model usage information; where
the first condition is that an AI data capability of AI capabilities that the second device can provide satisfies a usage condition of a target AI model; the second condition is that AI computing power of AI capabilities that the second device can provide satisfies a usage condition of the target AI model; and the target AI model is specified by the second device or determined based on the third information; and
the third condition is that the third device can provide an AI model that satisfies the first request.

Optionally, an implementation of determining, based on a result of whether at least one of the first condition, the second condition, and the third condition is satisfied, the auxiliary device that completes the first request includes at least one of the following:
when the first condition, the second condition, and the third condition are satisfied, determining that the auxiliary device that completes the first request is the third device;
when the third condition is not satisfied, determining that the auxiliary device that completes the first request is the fourth device; and
when the third condition is satisfied and the first condition is not satisfied, and/or the third condition is satisfied and the second condition is not satisfied, determining that the auxiliary device that completes the first request is the third device and the fourth device.

Optionally, the third condition is determined based on at least one of model existence of the second device, the update indication information, the third information, a capability upper limit of the fourth device, a fourth condition, and a fifth condition;
where the fourth condition is that a model version update time of the third information is later than a time when an AI model already exists on the second device; the fifth condition is that a structure of an existing AI model of the second device in the first request matches a structure of a model in the third information; and
the third condition includes one of the following:
   no AI model exists on the second device, and the update indication information in the first request allows a structure of an AI model to be updated;
   the update indication information in the first request allows a structure of an AI model to be updated, and the fourth condition is satisfied;
   the update indication information in the first request only allows a parameter of an AI model to be updated, and the fourth condition and the fifth condition are both satisfied;
   an existing AI model of the second device does not satisfy the first condition and cannot be implemented through a data request of the fourth device, and the update indication information in the first request allows a structure of an AI model to be updated;
   an existing AI model of the second device does not satisfy the first condition and cannot be implemented through a data request, the update indication information in the first request does not allow a structure of an AI model to be updated, and the fifth condition is satisfied; and
   the first request includes a model identifier of a requested AI model.

Optionally, the first determination module 601 is configured to:
perform first processing and obtain the first information based on the first request of the second device;
where the first processing includes at least one of the following:
   performing algorithm selection;
   performing computing power selection;
   determining a manner of obtaining data used in the first request; and
   determining second quality of service; and
   the first information includes at least one of the following:
      an algorithm corresponding to the first request, computing power corresponding to the first request, the manner of obtaining the data used in the first request, and second quality of service.

Optionally, an implementation of performing algorithm selection based on the first request of the second device includes:
performing mathematical problem modeling mapping based on the service description corresponding to the AI model in the first request, to determine the algorithm corresponding to the first request, where the algorithm corresponding to the first request is used by the third device to determine a matching candidate AI model based on mathematical problem modeling, and is used by the fourth device to determine a data item that needs to be collected in a data request, or is used by the fourth device to determine an AI training algorithm in an algorithm request;
where the algorithm corresponding to the first request includes at least one of the following:
   an input and an output of the AI model;
   an AI training algorithm;
   an AI technology category;
   identification information of the AI model;
   a capability category of the AI model; and
   a usage scenario.

Optionally, the algorithm corresponding to the first request satisfies at least one of the following:
the AI training algorithm includes at least one of the following: supervised learning, unsupervised learning, reinforcement learning, transfer learning, and meta-learning;
the AI technology category includes at least one of the following: a regression problem, a classification problem, a segmentation problem, a localization problem, and a detection problem; and
the capability category of the AI model includes at least one of the following: image super-resolution, a capability of predicting a spatiotemporal sequence, a capability of predicting a multidimensional time sequence, image compression and decompression capabilities, and a graph neural network.

Optionally, an implementation of performing computing power selection based on the first request of the second device includes:
determining, based on a result of mathematical problem modeling mapping performed on the service description corresponding to the AI model in the first request, the first quality of service, and/or the AI capability that the second device can provide, the computing power corresponding to the first request;
where the computing power corresponding to the first request is a computing resource of a target device for performing inference or training corresponding to the first request; and
the target device includes at least one of the following: a terminal, an access network device, a core network device, and operation administration and maintenance OAM.

Optionally, an implementation of determining, based on the first request of the second device, a manner of obtaining data used in the first request includes:
determining, based on the request category of the first request, the first quality of service in the first request, and/or the AI capability that the second device can provide, the manner of obtaining the data used in the first request, where the manner of obtaining the data includes one of the following: real-time obtaining and static obtaining.

Optionally, an implementation of determining second quality of service based on the first request of the second device includes:
determining the second quality of service based on a result of mathematical problem modeling mapping performed on the service description corresponding to the AI model in the first request, and/or the first quality of service;
where the first quality of service includes at least one of the following:
   computing power quality;
   algorithm quality;
   data quality; and
   network connection quality.

Optionally, the first quality of service satisfies at least one of the following:
the computing power quality includes at least one of the following: an inference latency and a training latency;
the algorithm quality includes at least one of the following: an AI classification problem evaluation metric, an AI regression problem evaluation metric, and a reinforcement learning evaluation metric; and
the data quality includes at least one of the following: a data obtaining latency, a data collection latency, a prediction time interval, and a number of prediction time intervals.

Optionally, the service description corresponding to the AI model includes at least one of the following: a service action, a usage scenario, and service action configuration information;
where the service action includes at least one of the following: service traffic prediction, prediction of a transmission beam with the highest channel quality, channel matrix prediction, channel feature vector compression and feedback, layer 3 reference signal received power RSRP prediction, configuration parameter optimization, and protocol stack module selection; and
the service action configuration information is a relevant configuration describing an AI service action output, and includes at least one of the following: a service action output data item, a dimension of the service action output data item, a maximum interval of each dimension of the service action output data item, and a minimum number of service action output data items in each dimension.

Optionally, in a case that the auxiliary device includes the fourth device, the apparatus further includes:
a fourth obtaining module, configured to: in a case that computing power of the second device cannot satisfy a usage condition of a target AI model, obtain an AI model that has been provided by the second device and model information of the AI model, or transfer, by the first device, the first information to the third device and obtain the candidate AI model and the model information of the candidate AI model from the third device, where the target AI model is specified by the second device or determined based on third information from the third device, and the third information is AI model version update information; and
a fourth transfer module, configured to transfer target information to the fourth device, so that the fourth device determines, based on the target information, a first model used for training or inference, where the target information includes the AI model that has been provided by the second device and the model information of the AI model, or the target information includes the candidate AI model and the model information of the candidate AI model.

Optionally, in a case that the auxiliary device includes the third device, the apparatus further includes:
a fifth obtaining module, configured to obtain the candidate AI model and the model information of the candidate AI model transferred by the third device;
a third determination module, configured to determine second model information based on the candidate AI model and the model information of the candidate AI model; and
a fifth transfer module, configured to transfer the second model information to the second device.

Optionally, the model information includes at least one of the following:
an AI model running image, model usage information, and a pre-evaluation result corresponding to the model.

It should be noted that this apparatus embodiment corresponds to the above method, all the implementations in the above method embodiment are applicable to this apparatus embodiment, and the same technical effect can also be achieved.

The artificial intelligence request analysis apparatus in this embodiment of the present application may be an electronic device, such as an electronic device with an operating system, or may be a component in the electronic device, such as an integrated circuit or a chip. The electronic device may be a terminal or other devices other than the terminal. For example, the terminal may include but is not limited to the categories of terminals 11 listed above, and other devices may be servers, network attached storage (Network Attached Storage, NAS), or the like, which are not specifically limited in the embodiments of the present application.

The artificial intelligence request analysis apparatus based on the embodiments of the present application can implement the processes in the method embodiments in FIG. 2, and achieve the same technical effect. To avoid repetition, details are not described herein again.

An embodiment of the present application further provides an artificial intelligence request analysis device. The artificial intelligence request analysis device is a first device, and includes a processor and a communications interface. The processor is configured to: determine first information based on a first request of a second device, where a category of the first request includes an artificial intelligence AI inference service request or a self-evolution request; and determine an auxiliary device that completes the first request, where auxiliary device is a third device and/or a fourth device. The communications interface is configured to transfer the first information to the auxiliary device.

The third device is configured to provide a candidate AI model and model information of the candidate AI model, the fourth device is configured to split the first request into a target request and send the target request to a corresponding functional entity to assist in completing the first request, and the target request includes: at least one of a connection request, a computing power request, an algorithm request, and a data request; and
the first request includes at least one of the following:
a service description corresponding to an AI model;
first quality of service;
an AI capability that the second device can provide; and
update indication information, where the update indication information includes: indication information that allows a structure of an AI model to be updated and/or allows a parameter of an AI model to be updated.

Optionally, the processor is configured to implement one of the following:
determining, based on second information, whether at least one of a first condition, a second condition, and a third condition is satisfied, where the second information includes the first request and/or third information from the third device; and
determining, based on a result of whether at least one of the first condition, the second condition, and the third condition is satisfied, the auxiliary device that completes the first request;
where the third information is AI model version update information, and the third information includes at least one of the following: a version update timestamp, a pre-evaluation result, version information, AI model structure indication information, and AI model usage information; where
the first condition is that an AI data capability of AI capabilities that the second device can provide satisfies a usage condition of a target AI model; the second condition is that AI computing power of AI capabilities that the second device can provide satisfies a usage condition of the target AI model; and the target AI model is specified by the second device or determined based on the third information; and
the third condition is that the third device can provide an AI model that satisfies the first request.

Optionally, the processor is configured to implement at least one of the following:
when the first condition, the second condition, and the third condition are satisfied, determining that the auxiliary device that completes the first request is the third device;
when the third condition is not satisfied, determining that the auxiliary device that completes the first request is the fourth device; and
when the third condition is satisfied and the first condition is not satisfied, and/or the third condition is satisfied and the second condition is not satisfied, determining that the auxiliary device that completes the first request is the third device and the fourth device.

Optionally, the third condition is determined based on at least one of model existence of the second device, the update indication information, the third information, a capability upper limit of the fourth device, a fourth condition, and a fifth condition;
where the fourth condition is that a model version update time of the third information is later than a time when an AI model already exists on the second device; the fifth condition is that a structure of an existing AI model of the second device in the first request matches a structure of a model in the third information; and
the third condition includes one of the following:
   no AI model exists on the second device, and the update indication information in the first request allows a structure of an AI model to be updated;
   the update indication information in the first request allows a structure of an AI model to be updated, and the fourth condition is satisfied;
   the update indication information in the first request only allows a parameter of an AI model to be updated, and the fourth condition and the fifth condition are both satisfied;
   an existing AI model of the second device does not satisfy the first condition and cannot be implemented through a data request of the fourth device, and the update indication information in the first request allows a structure of an AI model to be updated;
   an existing AI model of the second device does not satisfy the first condition and cannot be implemented through a data request, the update indication information in the first request does not allow a structure of an AI model to be updated, and the fifth condition is satisfied; and
   the first request includes a model identifier of a requested AI model.

Optionally, the processor is configured to:
perform first processing and obtain the first information based on the first request of the second device;
where the first processing includes at least one of the following:
   performing algorithm selection;
   performing computing power selection;
   determining a manner of obtaining data used in the first request; and
   determining second quality of service; and
   the first information includes at least one of the following:
      an algorithm corresponding to the first request, computing power corresponding to the first request, the manner of obtaining the data used in the first request, and second quality of service.

Optionally, the processor is configured to:
perform mathematical problem modeling mapping based on the service description corresponding to the AI model in the first request, to determine the algorithm corresponding to the first request, where the algorithm corresponding to the first request is used by the third device to determine a matching candidate AI model based on mathematical problem modeling, and is used by the fourth device to determine a data item that needs to be collected in a data request, or is used by the fourth device to determine an AI training algorithm in an algorithm request;
where the algorithm corresponding to the first request includes at least one of the following:
   an input and an output of the AI model;
   an AI training algorithm;
   an AI technology category;
   identification information of the AI model;
   a capability category of the AI model; and
   a usage scenario.

Optionally, the algorithm corresponding to the first request satisfies at least one of the following:
the AI training algorithm includes at least one of the following: supervised learning, unsupervised learning, reinforcement learning, transfer learning, and meta-learning;
the AI technology category includes at least one of the following: a regression problem, a classification problem, a segmentation problem, a localization problem, and a detection problem; and
the capability category of the AI model includes at least one of the following: image super-resolution, a capability of predicting a spatiotemporal sequence, a capability of predicting a multidimensional time sequence, image compression and decompression capabilities, and a graph neural network.

Optionally, the processor is configured to:
determine, based on a result of mathematical problem modeling mapping performed on the service description corresponding to the AI model in the first request, the first quality of service, and/or the AI capability that the second device can provide, the computing power corresponding to the first request;
where the computing power corresponding to the first request is a computing resource of a target device for performing inference or training corresponding to the first request; and
the target device includes at least one of the following: a terminal, an access network device, a core network device, and operation administration and maintenance OAM.

Optionally, the processor is configured to:
determine, based on the request category of the first request, the first quality of service in the first request, and/or the AI capability that the second device can provide, the manner of obtaining the data used in the first request, where the manner of obtaining the data includes one of the following: real-time obtaining and static obtaining.

Optionally, the processor is configured to:
determine the second quality of service based on a result of mathematical problem modeling mapping performed on the service description corresponding to the AI model in the first request, and/or the first quality of service;
where the first quality of service includes at least one of the following:
   computing power quality;
   algorithm quality;
   data quality; and
   network connection quality.

Optionally, the first quality of service satisfies at least one of the following:
the computing power quality includes at least one of the following: an inference latency and a training latency;
the algorithm quality includes at least one of the following: an AI classification problem evaluation metric, an AI regression problem evaluation metric, and a reinforcement learning evaluation metric; and
the data quality includes at least one of the following: a data obtaining latency, a data collection latency, a prediction time interval, and a number of prediction time intervals.

Optionally, the service description corresponding to the AI model includes at least one of the following: a service action, a usage scenario, and service action configuration information;
where the service action includes at least one of the following: service traffic prediction, prediction of a transmission beam with the highest channel quality, channel matrix prediction, channel feature vector compression and feedback, layer 3 reference signal received power RSRP prediction, configuration parameter optimization, and protocol stack module selection; and
the service action configuration information is a relevant configuration describing an AI service action output, and includes at least one of the following: a service action output data item, a dimension of the service action output data item, a maximum interval of each dimension of the service action output data item, and a minimum number of service action output data items in each dimension.

Optionally, in a case that the auxiliary device includes the fourth device, the communications interface is further configured to:
in a case that computing power of the second device cannot satisfy a usage condition of a target AI model, obtain an AI model that has been provided by the second device and model information of the AI model, or transfer, by the first device, the first information to the third device and obtaining the candidate AI model and the model information of the candidate AI model from the third device, where the target AI model is specified by the second device or determined based on third information from the third device, and the third information is AI model version update information; and
transfer target information to the fourth device, so that the fourth device determines, based on the target information, a first model used for training or inference, where the target information includes the AI model that has been provided by the second device and the model information of the AI model, or the target information includes the candidate AI model and the model information of the candidate AI model.

Optionally, in a case that the auxiliary device includes the third device, the communications interface is further configured to:
obtain the candidate AI model and the model information of the candidate AI model transferred by the third device.

Further, the processor is configured to: determine second model information based on the candidate AI model and the model information of the candidate AI model; and
the communications interface is configured to transfer the second model information to the second device.

Optionally, the model information includes at least one of the following:
an AI model running image, model usage information, and a pre-evaluation result corresponding to the model.

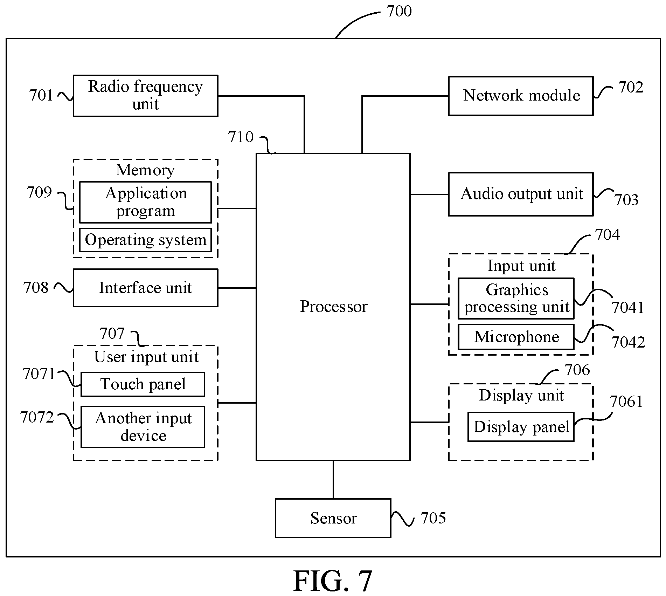

This embodiment of the first device corresponds to the method embodiment applied to the first device side, and each implementation process and implementation in the above method embodiment can be applied to the embodiment of the first device, and can achieve the same technical effect. Specifically, when the first device is a terminal, FIG. 7 is a schematic diagram of a hardware structure of a terminal implementing an embodiment of the present application.

A terminal 700 includes but is not limited to: at least some of a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to each component. The power supply may be logically connected to the processor 710 by using a power management system, so as to implement functions such as charging management, discharging management and power consumption management by using the power management system. The terminal structure shown in FIG. 7 does not constitute any limitation on the terminal, and the terminal may include more or fewer components than those shown in the figure, or combine some components, or have different component arrangements. Details are not described herein.

It should be understood that in this embodiment of the present application, the input unit 704 may include a graphics processing unit (Graphics Processing Unit, GPU) 7041 and a microphone 7042, and the graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode or the like. The user input unit 707 includes at least one of a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, function keys (such as a volume control key and a switch key), a trackball, a mouse, and a joystick. Details are not described herein.

In the embodiments of the present application, after receiving downlink data from the network side device, the radio frequency unit 701 can transmit the data to the processor 710 for processing. In addition, the radio frequency unit 701 can send uplink data to the network side device. Generally, the radio frequency unit 701 includes, but is not limited to, an antenna, an amplifier, a transceiver, a coupler, a low noise amplifier, a duplexer, and the like.

The memory 709 may be configured to store software programs or instructions and various pieces of data. The memory 709 may mainly include a first storage area storing a program or an instruction and a second storage area storing data, where the first storage area may store an operating system, an application program or instructions required by at least one function (for example, a sound playback function or an image playback function) and the like. Besides, the memory 709 may be a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 described in the embodiments of the present application is intended to include but is not limited to these and any other suitable categories of memories.

The processor 710 may include one or more processing units. Optionally, the processor 710 may integrate an application processor and a modem processor, where the application processor mainly processes an operating system, a user interface, an application program, and the like, and the modem processor mainly processes wireless communication signals, such as a baseband processor. It can be understood that, the modem processor may not be integrated into the processor 710.

The processor 710 is configured to:
determine first information based on a first request of a second device, where a category of the first request includes an artificial intelligence AI inference service request or a self-evolution request; and
determine an auxiliary device that completes the first request, where auxiliary device is a third device and/or a fourth device.

The radio frequency unit 701 is configured to: transfer the first information to the auxiliary device;
where the third device is configured to provide a candidate AI model and model information of the candidate AI model, the fourth device is configured to split the first request into a target request and send the target request to a corresponding functional entity to assist in completing the first request, and the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

Further, the processor 710 is configured to implement one of the following:
determining, based on second information, whether at least one of a first condition, a second condition, and a third condition is satisfied, where the second information includes the first request and/or third information from the third device; and
determining, based on a result of whether at least one of the first condition, the second condition, and the third condition is satisfied, the auxiliary device that completes the first request;
where the third information is AI model version update information, and the third information includes at least one of the following: a version update timestamp, a pre-evaluation result, version information, AI model structure indication information, and AI model usage information; where
the first condition is that an AI data capability of AI capabilities that the second device can provide satisfies a usage condition of a target AI model; the second condition is that AI computing power of AI capabilities that the second device can provide satisfies a usage condition of the target AI model; the target AI model is specified by the second device or determined based on the third information; and
the third condition is that the third device can provide an AI model that satisfies the first request.

Further, the processor 710 is configured to implement at least one of the following:
when the first condition, the second condition, and the third condition are satisfied, determining that the auxiliary device that completes the first request is the third device;
when the third condition is not satisfied, determining that the auxiliary device that completes the first request is the fourth device; and
when the third condition is satisfied and the first condition is not satisfied, and/or the third condition is satisfied and the second condition is not satisfied, determining that the auxiliary device that completes the first request is the third device and the fourth device.

Optionally, the third condition is determined based on at least one of model existence of the second device, the update indication information, the third information, a capability upper limit of the fourth device, a fourth condition, and a fifth condition;
where the fourth condition is that a model version update time of the third information is later than a time when an AI model already exists on the second device; the fifth condition is that a structure of an existing AI model of the second device in the first request matches a structure of a model in the third information; and
the third condition includes one of the following:
   no AI model exists on the second device, and the update indication information in the first request allows a structure of an AI model to be updated;
   the update indication information in the first request allows a structure of an AI model to be updated, and the fourth condition is satisfied;
   the update indication information in the first request only allows a parameter of an AI model to be updated, and the fourth condition and the fifth condition are both satisfied;
   an existing AI model of the second device does not satisfy the first condition and cannot be implemented through a data request of the fourth device, and the update indication information in the first request allows a structure of an AI model to be updated;
   an existing AI model of the second device does not satisfy the first condition and cannot be implemented through a data request, the update indication information in the first request does not allow a structure of an AI model to be updated, and the fifth condition is satisfied; and
   the first request includes a model identifier of a requested AI model.

Optionally, the processor 710 is configured to:
perform first processing and obtain the first information based on the first request of the second device;
where the first processing includes at least one of the following:
   performing algorithm selection;
   performing computing power selection;
   determining a manner of obtaining data used in the first request; and
   determining second quality of service; and
   the first information includes at least one of the following:
      an algorithm corresponding to the first request, computing power corresponding to the first request, the manner of obtaining the data used in the first request, and second quality of service.

The processor 710 is configured to implement:
performing mathematical problem modeling mapping based on the service description corresponding to the AI model in the first request, to determine the algorithm corresponding to the first request, where the algorithm corresponding to the first request is used by the third device to determine a matching candidate AI model based on mathematical problem modeling, and is used by the fourth device to determine a data item that needs to be collected in a data request, or is used by the fourth device to determine an AI training algorithm in an algorithm request;
where the algorithm corresponding to the first request includes at least one of the following:
   an input and an output of the AI model;
   an AI training algorithm;
   an AI technology category;
   identification information of the AI model;
   a capability category of the AI model; and
   a usage scenario.

Optionally, the algorithm corresponding to the first request satisfies at least one of the following:
the AI training algorithm includes at least one of the following: supervised learning, unsupervised learning, reinforcement learning, transfer learning, and meta-learning;
the AI technology category includes at least one of the following: a regression problem, a classification problem, a segmentation problem, a localization problem, and a detection problem; and
the capability category of the AI model includes at least one of the following: image super-resolution, a capability of predicting a spatiotemporal sequence, a capability of predicting a multidimensional time sequence, image compression and decompression capabilities, and a graph neural network.

Optionally, the processor 710 is configured to implement:
determining, based on a result of mathematical problem modeling mapping performed on the service description corresponding to the AI model in the first request, the first quality of service, and/or the AI capability that the second device can provide, the computing power corresponding to the first request;
where the computing power corresponding to the first request is a computing resource of a target device for performing inference or training corresponding to the first request; and
the target device includes at least one of the following: a terminal, an access network device, a core network device, and operation administration and maintenance OAM.

Optionally, the processor 710 is configured to implement:
determining, based on the request category of the first request, the first quality of service in the first request, and/or the AI capability that the second device can provide, the manner of obtaining the data used in the first request, where the manner of obtaining the data includes one of the following: real-time obtaining and static obtaining.

Optionally, the processor 710 is configured to implement:
determining the second quality of service based on a result of mathematical problem modeling mapping performed on the service description corresponding to the AI model in the first request, and/or the first quality of service;
where the first quality of service includes at least one of the following:
   computing power quality;
   algorithm quality;
   data quality; and
   network connection quality.

Optionally, the first quality of service satisfies at least one of the following:
the computing power quality includes at least one of the following: an inference latency and a training latency;
the algorithm quality includes at least one of the following: an AI classification problem evaluation metric, an AI regression problem evaluation metric, and a reinforcement learning evaluation metric; and
the data quality includes at least one of the following: a data obtaining latency, a data collection latency, a prediction time interval, and a number of prediction time intervals.

Optionally, the service description corresponding to the AI model includes at least one of the following: a service action, a usage scenario, and service action configuration information;
where the service action includes at least one of the following: service traffic prediction, prediction of a transmission beam with the highest channel quality, channel matrix prediction, channel feature vector compression and feedback, layer 3 reference signal received power RSRP prediction, configuration parameter optimization, and protocol stack module selection; and
the service action configuration information is a relevant configuration describing an AI service action output, and includes at least one of the following: a service action output data item, a dimension of the service action output data item, a maximum interval of each dimension of the service action output data item, and a minimum number of service action output data items in each dimension.

Optionally, in a case that the auxiliary device includes the fourth device, the radio frequency unit 701 is further configured to:
in a case that computing power of the second device cannot satisfy a usage condition of a target AI model, obtain an AI model that has been provided by the second device and model information of the AI model, or transfer, by the first device, the first information to the third device and obtaining the candidate AI model and the model information of the candidate AI model from the third device, where the target AI model is specified by the second device or determined based on third information from the third device, and the third information is AI model version update information; and
transfer target information to the fourth device, so that the fourth device determines, based on the target information, a first model used for training or inference, where the target information includes the AI model that has been provided by the second device and the model information of the AI model, or the target information includes the candidate AI model and the model information of the candidate AI model.

Optionally, in a case that the auxiliary device includes the third device, the radio frequency unit 701 is further configured to:
obtain the candidate AI model and the model information of the candidate AI model transferred by the third device.

The processor 710 is configured to: determine second model information based on the candidate AI model and the model information of the candidate AI model; and
the radio frequency unit 701 is further configured to: transfer the second model information to the second device.

Further, the model information includes at least one of the following:
an AI model running image, model usage information, and a pre-evaluation result corresponding to the model.

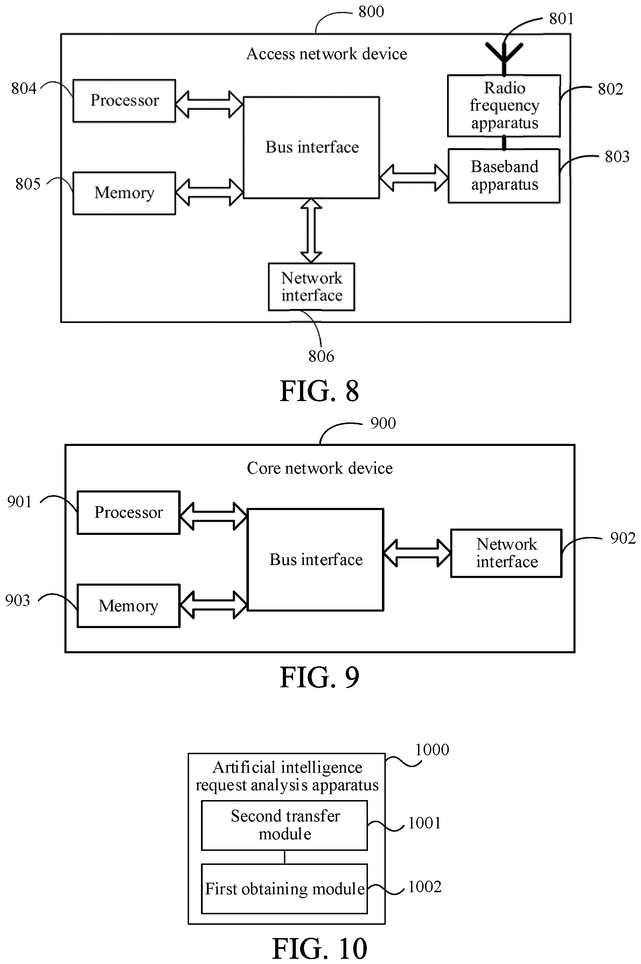

Optionally, when the first device is an access network device, a structure of the access network device is shown in FIG. 8. An access network device 800 includes: an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes information to be sent and sends the information to the radio frequency apparatus 802, and the radio frequency apparatus 802 processes the received information and then sends the information through the antenna 801.

The method performed by the network side device in the foregoing embodiment may be implemented in the baseband apparatus 803. The baseband apparatus 803 includes a baseband processor.

The baseband apparatus 803 may include, for example, at least one baseband board, and a plurality of chips are arranged on the baseband board. As shown in FIG. 8, one of the chips is, for example, the baseband processor and is connected to the memory 805 through a bus interface, to invoke a program in the memory 805, so as to perform the operations of the network device shown in the foregoing method embodiment.

The network side device may further include a network interface 806, and the interface is, for example, a common public radio interface (common public radio interface, CPRI).

Specifically, the access network device 800 in this embodiment of the present invention further includes: an instruction or a program stored on the memory 805 and executable on the processor 804, and the processor 804 invokes the instruction or program in the memory 805 to execute the method executed by the modules shown in FIG. 6, and achieve the same technical effect. To avoid repetition, details are not described herein again.

Optionally, when the first device is a core network device, a structure of the core network device is shown in FIG. 9. A core network device 900 includes: a processor 901, a network interface 902, and a memory 903. The network interface 902 is, for example, a common public radio interface (common public radio interface, CPRI).

Specifically, the core network device 900 in this embodiment of the present invention further includes: an instruction or a program stored on the memory 903 and executable on the processor 901, and the processor 901 invokes the instruction or program in the memory 903 to execute the method executed by the modules shown in FIG. 6, and achieve the same technical effect. To avoid repetition, details are not described herein again.

Preferably, an embodiment of the present application further provides an artificial intelligence request analysis device. The artificial intelligence request analysis device is a first device, and includes a processor, a memory, and a program or an instruction stored in the memory and executable on the processor. When the program or instruction is executed by the processor, each process of the embodiment of the above artificial intelligence request analysis method is performed, and the same technical effect can be achieved. To avoid repetition, details are not described herein.

An embodiment of the present application further provides a readable storage medium. The computer-readable storage medium stores a program or an instruction, and when the program or the instruction is executed by a processor, each process of the embodiment of the above artificial intelligence request analysis method applied to the first device side is performed, and the same technical effect can be achieved. To avoid repetition, details are not described herein.

The computer-readable storage medium includes a read-only memory (Read-Only Memory, ROM), a random access memory (Random Access Memory, RAM), a magnetic disk, an optical disc, or the like.

As shown in FIG. 10, an embodiment of the present application further provides an artificial intelligence request analysis apparatus 1000, applied to a second device, including:
a second transfer module 1001, configured to transfer a first request to a first device, where a category of the first request includes an artificial intelligence AI inference service request or a self-evolution request; and
a first obtaining module 1002, configured to obtain second model information transferred by the first device, where the second model information is determined by the first device based on a candidate AI model and model information of the candidate AI model transferred by a third device;
where the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

It should be noted that this apparatus embodiment is an apparatus corresponding to the above method, all the implementations in the above method embodiment are applicable to this apparatus embodiment, and the same technical effect can also be achieved. Details are not described herein again.

An embodiment of the present application further provides an artificial intelligence request analysis device. The artificial intelligence request analysis device is a second device, and includes a processor and a communications interface. The communications interface is configured to transfer a first request to a first device, where a category of the first request includes an artificial intelligence AI inference service request or a self-evolution request. The processor is configured to obtain second model information transferred by the first device, where the second model information is determined by the first device based on a candidate AI model and model information of the candidate AI model transferred by a third device;
where the first request includes at least one of the following:
a service description corresponding to an AI model;
first quality of service;
an AI capability that the second device can provide; and
update indication information, where the update indication information includes: indication information that allows a structure of an AI model to be updated and/or allows a parameter of an AI model to be updated.

Preferably, an embodiment of the present application further provides an artificial intelligence request analysis device. The artificial intelligence request analysis device is a second device, and includes a processor, a memory, and a program or an instruction stored in the memory and executable on the processor. When the program or instruction is executed by the processor, each process of the embodiment of the above artificial intelligence request analysis method applied to the second device side is performed, and the same technical effect can be achieved. To avoid repetition, details are not described herein.

Optionally, the second device in this embodiment of the present application may also be a terminal, an access network device, or a core network device. For a specific device structure, refer to the structure of each device in FIG. 7 to FIG. 9. Details are not described herein.

Specifically, the second device in this embodiment of the present application further includes: an instruction or a program stored on the memory and executable on the processor, and the processor invokes the instruction or program in the memory to execute the method executed by the module shown in FIG. 10, and achieve the same technical effect. To avoid repetition, details are not described herein again.

An embodiment of the present application further provides a readable storage medium. The readable storage medium stores a program or an instruction, and when the program or the instruction is executed by a processor, each process of the embodiment of the above artificial intelligence request analysis method applied to the second device side is performed, and the same technical effect can be achieved. To avoid repetition, details are not described herein.

The processor is a processor in the second device in the above embodiments. The readable storage medium includes a computer-readable storage medium, such as a computer read-only memory ROM, a random access memory RAM, a magnetic disk, an optical disc, or the like.

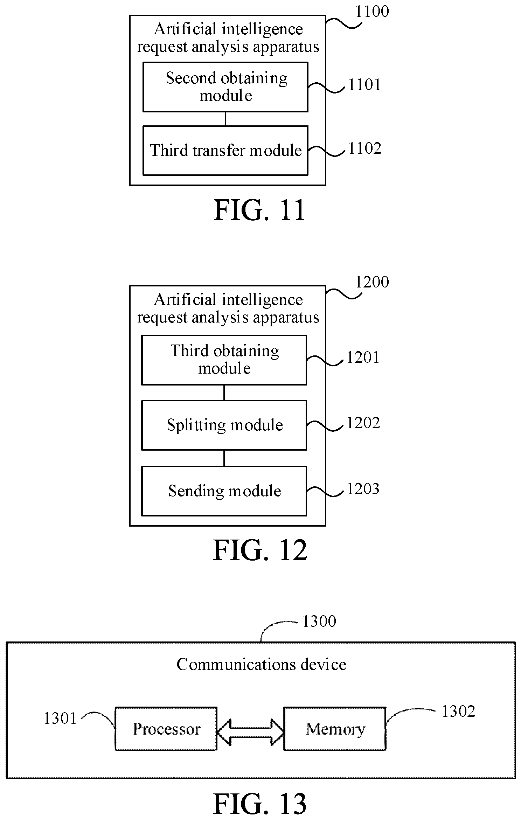

As shown in FIG. 11, an embodiment of the present application further provides an artificial intelligence request analysis apparatus 1100, applied to a third device, including:
a second obtaining module 1101, configured to obtain first information transferred by a first device, where the first information is determined by the first device based on a first request of a second device, and a category of the first request includes an artificial intelligence AI inference service request or a self-evolution request; and
a third transfer module 1102, configured to transfer a candidate AI model and model information of the candidate AI model to the first device based on the first information;
where the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

Optionally, the third transfer module 1102 includes:
a determination unit, configured to determine the candidate AI model based on an algorithm corresponding to the first request, computing power corresponding to the first request, and/or second quality of service in the first information; and
a transfer unit, configured to transfer the candidate AI model and the model information of the candidate AI model to the first device.

It should be noted that this apparatus embodiment is an apparatus corresponding to the above method, all the implementations in the above method embodiment are applicable to this apparatus embodiment, and the same technical effect can also be achieved. Details are not described herein again.

An embodiment of the present application further provides an artificial intelligence request analysis device. The artificial intelligence request analysis device is a third device, and includes a processor and a communications interface. The communications interface is configured to obtain first information transferred by a first device, where the first information is determined by the first device based on a first request of a second device, and a category of the first request includes an artificial intelligence AI inference service request or a self-evolution request; and transfer a candidate AI model and model information of the candidate AI model to the first device based on the first information;
where the first request includes at least one of the following:
a service description corresponding to an AI model;
first quality of service;
an AI capability that the second device can provide; and
update indication information, where the update indication information includes: indication information that allows a structure of an AI model to be updated and/or allows a parameter of an AI model to be updated.

Optionally, the processor is configured to:
determine the candidate AI model based on an algorithm corresponding to the first request, computing power corresponding to the first request, and/or second quality of service in the first information; and
the communications interface is configured to transfer the candidate AI model and the model information of the candidate AI model to the first device.

Preferably, an embodiment of the present application further provides an artificial intelligence request analysis device. The artificial intelligence request analysis device is a third device, and includes a processor, a memory, and a program or an instruction stored in the memory and executable on the processor. When the program or instruction is executed by the processor, each process of the embodiment of the above artificial intelligence request analysis method applied to the third device side is performed, and the same technical effect can be achieved. To avoid repetition, details are not described herein.

Optionally, the third device in this embodiment of the present application may also be a terminal, an access network device, or a core network device. For a specific device structure, refer to the structure of each device in FIG. 7 to FIG. 9. Details are not described herein.

Specifically, the third device in this embodiment of the present application further includes: an instruction or a program stored on the memory and executable on the processor, and the processor invokes the instruction or program in the memory to execute the method executed by the module shown in FIG. 11, and achieve the same technical effect. To avoid repetition, details are not described herein again.

An embodiment of the present application further provides a readable storage medium. The readable storage medium stores a program or an instruction, and when the program or the instruction is executed by a processor, each process of the embodiment of the above artificial intelligence request analysis method applied to the third device side is performed, and the same technical effect can be achieved. To avoid repetition, details are not described herein.

The processor is a processor in the third device in the above embodiments. The readable storage medium includes a computer-readable storage medium, such as a computer read-only memory ROM, a random access memory RAM, a magnetic disk, an optical disc, or the like.

As shown in FIG. 12, an embodiment of the present application further provides an artificial intelligence request analysis apparatus 1200, applied to a fourth device, including:
a third obtaining module 1201, configured to obtain first information transferred by a first device, where the first information is determined by the first device based on a first request of a second device, and a category of the first request includes an artificial intelligence AI inference service request or a self-evolution request;
a splitting module 1202, configured to split the first request into a target request based on the first information; and
a sending module 1203, configured to send the target request to a corresponding functional entity to assist in completing the first request;
where the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

Optionally, the apparatus further includes:
a sixth obtaining module, configured to obtain target information transferred by the first device, where the target information includes an AI model that has been provided by the second device and model information of the AI model, or the target information includes a candidate AI model and model information of the candidate AI model; and
a fourth determination module, configured to determine, based on the target information, a first model used for training or inference.

Optionally, the first information includes at least one of the following:
an algorithm corresponding to the first request, computing power corresponding to the first request, a manner of obtaining data used in the first request, and second quality of service; and
the splitting module 1202 is configured to implement at least one of the following:
   in a case that a data capability of the second device in the first request cannot satisfy a usage condition of a target AI model, splitting the first request into at least one of a data request and a connection request;
   in a case that computing power of the second device in the first request cannot satisfy a usage condition of a target AI model, splitting the first request into at least one of a computing power request and a connection request; and
   in a case that an AI training algorithm in the first information is a distributed training algorithm, splitting the first request into at least one of a computing power request, an algorithm request, and a connection request;
   where the target AI model is specified by the second device or determined based on third information from a third device, where the third information is AI model version update information, and the third device is configured to provide a candidate AI model and model information of the candidate AI model.

It should be noted that this apparatus embodiment is an apparatus corresponding to the above method, all the implementations in the above method embodiment are applicable to this apparatus embodiment, and the same technical effect can also be achieved. Details are not described herein again.

An embodiment of the present application further provides an artificial intelligence request analysis device. The artificial intelligence request analysis device is a fourth device, and includes a processor and a communications interface. The communications interface is configured to obtain first information transferred by a first device, where the first information is determined by the first device based on a first request of a second device, and a category of the first request includes an artificial intelligence AI inference service request or a self-evolution request; and the processor is configured to split the first request into a target request based on the first information. The communications interface is configured to send the target request to a corresponding functional entity to assist in completing the first request;
where the target request includes: at least one of a connection request, a computing power request, an algorithm request, and a data request; and
the first request includes at least one of the following:
   a service description corresponding to an AI model;
   first quality of service;
   an AI capability that the second device can provide; and
   update indication information, where the update indication information includes: indication information that allows a structure of an AI model to be updated and/or allows a parameter of an AI model to be updated.

Optionally, the communications interface is further configured to:
obtain target information transferred by the first device, where the target information includes an AI model that has been provided by the second device and model information of the AI model, or the target information includes a candidate AI model and model information of the candidate AI model; and
the processor is configured to: determine, based on the target information, a first model used for training or inference.

Optionally, the first information includes at least one of the following:
an algorithm corresponding to the first request, computing power corresponding to the first request, a manner of obtaining data used in the first request, and second quality of service; and
the processor is further configured to implement at least one of the following:
   in a case that a data capability of the second device in the first request cannot satisfy a usage condition of a target AI model, splitting the first request into at least one of a data request and a connection request;
   in a case that computing power of the second device in the first request cannot satisfy a usage condition of a target AI model, splitting the first request into at least one of a computing power request and a connection request; and
   in a case that an AI training algorithm in the first information is a distributed training algorithm, splitting the first request into at least one of a computing power request, an algorithm request, and a connection request;
   where the target AI model is specified by the second device or determined based on third information from a third device, where the third information is AI model version update information, and the third device is configured to provide a candidate AI model and model information of the candidate AI model.

Preferably, an embodiment of the present application further provides an artificial intelligence request analysis device. The artificial intelligence request analysis device is a fourth device, and includes a processor, a memory, and a program or an instruction stored in the memory and executable on the processor. When the program or instruction is executed by the processor, each process of the embodiment of the above artificial intelligence request analysis method applied to the fourth device side is performed, and the same technical effect can be achieved. To avoid repetition, details are not described herein.

Optionally, the fourth device in this embodiment of the present application may also be a terminal, an access network device, or a core network device. For a specific device structure, refer to the structure of each device in FIG. 7 to FIG. 9. Details are not described herein.

Specifically, the fourth device in this embodiment of the present application further includes: an instruction or a program stored on the memory and executable on the processor, and the processor invokes the instruction or program in the memory to execute the method executed by the module shown in FIG. 12, and achieve the same technical effect. To avoid repetition, details are not described herein again.

An embodiment of the present application further provides a readable storage medium. The readable storage medium stores a program or an instruction, and when the program or the instruction is executed by a processor, each process of the embodiment of the above artificial intelligence request analysis method applied to the fourth device side is performed, and the same technical effect can be achieved. To avoid repetition, details are not described herein.

The processor is a processor in the fourth device in the above embodiments. The readable storage medium includes a computer-readable storage medium, such as a computer read-only memory ROM, a random access memory RAM, a magnetic disk, an optical disc, or the like.

Optionally, as shown in FIG. 13, an embodiment of the present application further provides a communications device 1300, including a processor 1301 and a memory 1302. The memory 1302 stores a program or an instruction executable on the processor 1301. For example, when the communications device 1300 is a first device, when the program or the instruction is executed by the processor 1301, steps of the embodiments of the above artificial intelligence request analysis method are performed, and the same technical effect can be achieved. When the communications device 1300 is a second device, when the program or the instruction is executed by the processor 1301, steps of the embodiments of the above artificial intelligence request analysis method are performed, and the same technical effect can be achieved. When the communications device 1300 is a third device, when the program or the instruction is executed by the processor 1301, steps of the embodiments of the above artificial intelligence request analysis method are performed, and the same technical effect can be achieved. When the communications device 1300 is a fourth device, when the program or the instruction is executed by the processor 1301, steps of the embodiments of the above artificial intelligence request analysis method are performed, and the same technical effect can be achieved. To avoid repetition, details are not described herein.

An embodiment of the present application further provides a chip, the chip includes a processor and a communications interface, the communications interface is coupled to the processor, and the processor is configured to run programs or instructions to implement each process of the embodiment of the above artificial intelligence request analysis method and the same technical effects can be achieved. To avoid repetition, details are not described herein again.

It should be understood that the chips mentioned in the embodiments of the present application may also be referred to as a system-level chip, a system chip, a chip system, or a system-on-chip.

An embodiment of the present application further provides a computer program/program product, the computer program/program product is stored in a storage medium, and the computer program/program product is executed by at least one processor to implement each process of the embodiment of the above artificial intelligence request analysis method and the same technical effects can be achieved. To avoid repetition, details are not described herein again.

An embodiment of the present application further provides a communications system, including: a first device, a second device, a third device, and a fourth device. The first device may be configured to perform the steps of the above artificial intelligence request analysis method. The second device may be configured to perform the steps of the above artificial intelligence request analysis method. The third device can be configured to perform the steps of the above artificial intelligence request analysis method. The fourth device can be configured to perform the steps of the above artificial intelligence request analysis method.

It should be noted that in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. Without more limitations, elements defined by the sentence "including one" does not exclude that there are still other same elements in the processes, methods, objects, or apparatuses. In addition, it should be pointed out that the scope of the methods and apparatuses in the implementations of the present application is not limited to performing functions in the order shown or discussed, and may also include performing functions in a substantially simultaneous manner or in a reverse order based on the functions involved, for example, the described methods may be performed in an order different from that described, and various steps may also be added, omitted, or combined. In addition, features described with reference to some examples may be combined in other examples.

According to the descriptions in the foregoing implementations, a person skilled in the art may clearly learn that the method based on the foregoing embodiment may be implemented by relying on software and a necessary common hardware platform or by using hardware. However, in many cases, the former is a better implementation. Based on such an understanding, the technical solutions of the present application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of the present application.

The embodiments of the present application are described above with reference to the accompanying drawings, but the present application is not limited to the above specific implementations, and the above specific implementations are only illustrative and not restrictive. Under the enlightenment of the present application, those of ordinary skill in the art can make many forms without departing from the purpose of the present application and the protection scope of the claims, all of which fall within the protection of the present application.

## Claims

1. An artificial intelligence request analysis method, comprising:
determining, by a first device, first information based on a first request of a second device, wherein a category of the first request comprises an artificial intelligence AI inference service request or a self-evolution request;
determining, by the first device, an auxiliary device that completes the first request, wherein the auxiliary device is a third device and/or a fourth device; and
transferring, by the first device, the first information to the auxiliary device;
wherein the third device is configured to provide a candidate AI model and model information of the candidate AI model, the fourth device is configured to split the first request into a target request and send the target request to a corresponding functional entity to assist in completing the first request, and the target request comprises: at least one of a connection request, a computing power request, an algorithm request, and a data request; and
the first request comprises at least one of the following:
a service description corresponding to an AI model;
first quality of service;
an AI capability that the second device can provide; and
update indication information, wherein the update indication information comprises: indication information that allows a structure of an AI model to be updated and/or allows a parameter of an AI model to be updated.

2. The method according to claim 1, wherein the determining, by the first device, an auxiliary device that completes the first request comprises one of the following:
determining, by the first device based on second information, whether at least one of a first condition, a second condition, and a third condition is satisfied, wherein the second information comprises the first request and/or third information from the third device; and
determining, based on a result of whether at least one of the first condition, the second condition, and the third condition is satisfied, the auxiliary device that completes the first request;
wherein the third information is AI model version update information, and the third information comprises at least one of the following: a version update timestamp, a pre-evaluation result, version information, AI model structure indication information, and AI model usage information; wherein
the first condition is that an AI data capability of AI capabilities that the second device can provide satisfies a usage condition of a target AI model; the second condition is that AI computing power of AI capabilities that the second device can provide satisfies a usage condition of the target AI model; and the target AI model is specified by the second device or determined based on the third information; and
the third condition is that the third device can provide an AI model that satisfies the first request.

3. The method according to claim 2, wherein the determining, based on a result of whether at least one of the first condition, the second condition, and the third condition is satisfied, the auxiliary device that completes the first request comprises at least one of the following:
when the first condition, the second condition, and the third condition are satisfied, determining that the auxiliary device that completes the first request is the third device;
when the third condition is not satisfied, determining that the auxiliary device that completes the first request is the fourth device; and
when the third condition is satisfied and the first condition is not satisfied, and/or the third condition is satisfied and the second condition is not satisfied, determining that the auxiliary device that completes the first request is the third device and the fourth device.

4. The method according to claim 2, wherein the third condition is determined based on at least one of an AI model existence status of the second device, the update indication information, the third information, a capability upper limit of the fourth device, a fourth condition, and a fifth condition;
wherein the fourth condition is that an AI model version update time of the third information is later than a time when an AI model already exists on the second device; the fifth condition is that a structure of an existing AI model of the second device in the first request matches a structure of a model in the third information; and
the third condition comprises one of the following:
no AI model exists on the second device, and the update indication information in the first request allows a structure of an AI model to be updated;
the update indication information in the first request allows a structure of an AI model to be updated, and the fourth condition is satisfied;
the update indication information in the first request only allows a parameter of an AI model to be updated, and the fourth condition and the fifth condition are both satisfied;
an existing AI model of the second device does not satisfy the first condition and cannot be implemented through a data request of the fourth device, and the update indication information in the first request allows a structure of an AI model to be updated;
an existing AI model of the second device does not satisfy the first condition and cannot be implemented through a data request, the update indication information in the first request does not allow a structure of an AI model to be updated, and the fifth condition is satisfied; and
the first request comprises a model identifier of a requested AI model.

5. The method according to claim 1, wherein the determining, by a first device, first information based on a first request of a second device comprises:
performing, by the first device, first processing and obtaining the first information based on the first request of the second device;
wherein the first processing comprises at least one of the following:
performing algorithm selection;
performing computing power selection;
determining a manner of obtaining data used in the first request; and
determining second quality of service; and
the first information comprises at least one of the following:
an algorithm corresponding to the first request, computing power corresponding to the first request, the manner of obtaining the data used in the first request, and second quality of service.

6. The method according to claim 5, wherein the performing algorithm selection based on the first request of the second device comprises:
performing mathematical problem modeling mapping based on the service description corresponding to the AI model in the first request, to determine the algorithm corresponding to the first request, wherein the algorithm corresponding to the first request is used by the third device to determine a matching candidate AI model based on mathematical problem modeling, and is used by the fourth device to determine a data item that needs to be collected in a data request, or is used by the fourth device to determine an AI training algorithm in an algorithm request;
wherein the algorithm corresponding to the first request comprises at least one of the following:
an input and an output of the AI model;
an AI training algorithm;
an AI technology category;
identification information of the AI model;
a capability category of the AI model; and
a usage scenario.

7. The method according to claim 6, wherein the algorithm corresponding to the first request satisfies at least one of the following:
the AI training algorithm comprises at least one of the following: supervised learning, unsupervised learning, reinforcement learning, transfer learning, and meta-learning;
the AI technology category comprises at least one of the following: a regression problem, a classification problem, a segmentation problem, a localization problem, and a detection problem; and
the capability category of the AI model comprises at least one of the following: image super-resolution, a capability of predicting a spatiotemporal sequence, a capability of predicting a multidimensional time sequence, image compression and decompression capabilities, and a graph neural network.

8. The method according to claim 5, wherein the performing computing power selection based on the first request of the second device comprises:
determining, based on a result of mathematical problem modeling mapping performed on the service description corresponding to the AI model in the first request, the first quality of service, and/or the AI capability that the second device can provide, the computing power corresponding to the first request;
wherein the computing power corresponding to the first request is a computing resource of a target device for performing inference or training corresponding to the first request; and
the target device comprises at least one of the following: a terminal, an access network device, a core network device, and operation administration and maintenance OAM.

9. The method according to claim 5, wherein the determining, based on the first request of the second device, a manner of obtaining data used in the first request comprises:
determining, based on the request category of the first request, the first quality of service in the first request, and/or the AI capability that the second device can provide, the manner of obtaining the data used in the first request, wherein the manner of obtaining the data comprises one of the following: real-time obtaining and static obtaining.

10. The method according to claim 5, wherein the determining second quality of service based on the first request of the second device comprises:
determining the second quality of service based on a result of mathematical problem modeling mapping performed on the service description corresponding to the AI model in the first request, and/or the first quality of service;
wherein the first quality of service comprises at least one of the following:
computing power quality;
algorithm quality;
data quality; and
network connection quality.

11. The method according to claim 10, wherein the first quality of service satisfies at least one of the following:
the computing power quality comprises at least one of the following: an inference latency and a training latency;
the algorithm quality comprises at least one of the following: an AI classification problem evaluation metric, an AI regression problem evaluation metric, and a reinforcement learning evaluation metric; and
the data quality comprises at least one of the following: a data obtaining latency, a data collection latency, a prediction time interval, and a number of prediction time intervals.

12. The method according to any one of claims 1 to 11, wherein the service description corresponding to the AI model comprises at least one of the following: a service action, a usage scenario, and service action configuration information;
wherein the service action comprises at least one of the following: service traffic prediction, prediction of a transmission beam with the highest channel quality, channel matrix prediction, channel feature vector compression and feedback, layer 3 reference signal received power RSRP prediction, configuration parameter optimization, and protocol stack module selection; and
the service action configuration information is a relevant configuration describing an AI service action output, and comprises at least one of the following: a service action output data item, a dimension of the service action output data item, a maximum interval of each dimension of the service action output data item, and a minimum number of service action output data items in each dimension.

13. The method according to claim 1, wherein in a case that the auxiliary device comprises the fourth device, the method further comprises:
in a case that computing power of the second device cannot satisfy a usage condition of a target AI model, obtaining, by the first device, an AI model that has been provided by the second device and model information of the AI model, or transferring, by the first device, the first information to the third device and obtaining the candidate AI model and the model information of the candidate AI model from the third device, wherein the target AI model is specified by the second device or determined based on third information from the third device, and the third information is AI model version update information; and
transferring, by the first device, target information to the fourth device, so that the fourth device determines, based on the target information, a first model used for training or inference, wherein the target information comprises the AI model that has been provided by the second device and the model information of the AI model, or the target information comprises the candidate AI model and the model information of the candidate AI model.

14. The method according to claim 1, wherein in a case that the auxiliary device comprises the third device, the method further comprises:
obtaining, by the first device, the candidate AI model and the model information of the candidate AI model transferred by the third device;
determining, by the first device, second model information based on the candidate AI model and the model information of the candidate AI model; and
transferring, by the first device, the second model information to the second device.

15. The method according to claim 13 or 14, wherein the model information comprises at least one of the following:
an AI model running image, AI model usage information, and a pre-evaluation result corresponding to the AI model.

16. An artificial intelligence request analysis method, comprising:
transferring, by a second device, a first request to a first device, wherein a category of the first request comprises an artificial intelligence AI inference service request or a self-evolution request; and
obtaining, by the second device, second model information transferred by the first device, wherein the second model information is determined by the first device based on a candidate AI model and model information of the candidate AI model transferred by a third device;
wherein the first request comprises at least one of the following:
a service description corresponding to an AI model;
first quality of service;
an AI capability that the second device can provide; and
update indication information, wherein the update indication information comprises: indication information that allows a structure of an AI model to be updated and/or allows a parameter of an AI model to be updated.

17. An artificial intelligence request analysis method, comprising:
obtaining, by a third device, first information transferred by a first device, wherein the first information is determined by the first device based on a first request of a second device, and a category of the first request comprises an artificial intelligence AI inference service request or a self-evolution request; and
transferring, by the third device, a candidate AI model and model information of the candidate AI model to the first device based on the first information;
wherein the first request comprises at least one of the following:
a service description corresponding to an AI model;
first quality of service;
an AI capability that the second device can provide; and
update indication information, wherein the update indication information comprises: indication information that allows a structure of an AI model to be updated and/or allows a parameter of an AI model to be updated.

18. The method according to claim 17, wherein the transferring, by the third device, a candidate AI model and model information of the candidate AI model to the first device based on the first information comprises:
determining, by the third device, the candidate AI model based on an algorithm corresponding to the first request, computing power corresponding to the first request, and/or second quality of service in the first information; and
transferring, by the third device, the candidate AI model and the model information of the candidate AI model to the first device.

19. An artificial intelligence request analysis method, comprising:
obtaining, by a fourth device, first information transferred by a first device, wherein the first information is determined by the first device based on a first request of a second device, and a category of the first request comprises an artificial intelligence AI inference service request or a self-evolution request;
splitting, by the fourth device, the first request into a target request based on the first information; and
sending, by the fourth device, the target request to a corresponding functional entity to assist in completing the first request;
wherein the target request comprises: at least one of a connection request, a computing power request, an algorithm request, and a data request; and
the first request comprises at least one of the following:
a service description corresponding to an AI model;
first quality of service;
an AI capability that the second device can provide; and
update indication information, wherein the update indication information comprises: indication information that allows a structure of an AI model to be updated and/or allows a parameter of an AI model to be updated.

20. The method according to claim 19, further comprising:
obtaining, by the fourth device, target information transferred by the first device, wherein the target information comprises an AI model that has been provided by the second device and model information of the AI model, or the target information comprises a candidate AI model and model information of the candidate AI model; and
determining, by the fourth device based on the target information, a first model used for training or inference.

21. The method according to claim 19, wherein the first information comprises at least one of the following:
an algorithm corresponding to the first request, computing power corresponding to the first request, a manner of obtaining data used in the first request, and second quality of service; and
the splitting, by the fourth device, the first request into a target request based on the first information comprises at least one of the following:
in a case that a data capability of the second device in the first request cannot satisfy a usage condition of a target AI model, splitting the first request into at least one of a data request and a connection request;
in a case that computing power of the second device in the first request cannot satisfy a usage condition of a target AI model, splitting the first request into at least one of a computing power request and a connection request; and
in a case that an AI training algorithm in the first information is a distributed training algorithm, splitting the first request into at least one of a computing power request, an algorithm request, and a connection request;
wherein the target AI model is specified by the second device or determined based on third information from a third device, wherein the third information is AI model version update information, and the third device is configured to provide a candidate AI model and model information of the candidate AI model.

22. An artificial intelligence request analysis apparatus, applied to a first device, comprising:
a first determination module, configured to determine first information based on a first request of a second device, wherein a category of the first request comprises an artificial intelligence AI inference service request or a self-evolution request;
a second determination module, configured to determine an auxiliary device that completes the first request, wherein the auxiliary device is a third device and/or a fourth device; and
a first transfer module, configured to transfer the first information to the auxiliary device;
wherein the third device is configured to provide a candidate AI model and model information of the candidate AI model, the fourth device is configured to split the first request into a target request and send the target request to a corresponding functional entity to assist in completing the first request, and the target request comprises: at least one of a connection request, a computing power request, an algorithm request, and a data request; and
the first request comprises at least one of the following:
a service description corresponding to an AI model;
first quality of service;
an AI capability that the second device can provide; and
update indication information, wherein the update indication information comprises: indication information that allows a structure of an AI model to be updated and/or allows a parameter of an AI model to be updated.

23. An artificial intelligence request analysis apparatus, applied to a second device, comprising:
a second transfer module, configured to transfer a first request to a first device, wherein a category of the first request comprises an artificial intelligence AI inference service request or a self-evolution request; and
a first obtaining module, configured to obtain second model information transferred by the first device, wherein the second model information is determined by the first device based on a candidate AI model and model information of the candidate AI model transferred by a third device;
wherein the first request comprises at least one of the following:
a service description corresponding to an AI model;
first quality of service;
an AI capability that the second device can provide; and
update indication information, wherein the update indication information comprises: indication information that allows a structure of an AI model to be updated and/or allows a parameter of an AI model to be updated.

24. An artificial intelligence request analysis apparatus, applied to a third device, comprising:
a second obtaining module, configured to obtain first information transferred by a first device, wherein the first information is determined by the first device based on a first request of a second device, and a category of the first request comprises an artificial intelligence AI inference service request or a self-evolution request; and
a third transfer module, configured to transfer a candidate AI model and model information of the candidate AI model to the first device based on the first information;
wherein the first request comprises at least one of the following:
a service description corresponding to an AI model;
first quality of service;
an AI capability that the second device can provide; and
update indication information, wherein the update indication information comprises: indication information that allows a structure of an AI model to be updated and/or allows a parameter of an AI model to be updated.

25. An artificial intelligence request analysis apparatus, applied to a fourth device, comprising:
a third obtaining module, configured to obtain first information transferred by a first device, wherein the first information is determined by the first device based on a first request of a second device, and a category of the first request comprises an artificial intelligence AI inference service request or a self-evolution request;
a splitting module, configured to split the first request into a target request based on the first information; and
a sending module, configured to send the target request to a corresponding functional entity to assist in completing the first request;
wherein the target request comprises: at least one of a connection request, a computing power request, an algorithm request, and a data request; and
the first request comprises at least one of the following:
a service description corresponding to an AI model;
first quality of service;
an AI capability that the second device can provide; and
update indication information, wherein the update indication information comprises: indication information that allows a structure of an AI model to be updated and/or allows a parameter of an AI model to be updated.

26. An artificial intelligence request analysis device, wherein the artificial intelligence request analysis device is a first device, a second device, a third device, or a fourth device, and comprises a processor and a memory, the memory stores a program or an instruction executable on the processor, and when the program or the instruction is executed by the processor, the steps of the artificial intelligence request analysis method according to any one of claims 1 to 21 are performed.

27. A readable storage medium, storing a program or an instruction, wherein when the program or the instruction is executed by a processor, the steps of the artificial intelligence request analysis method according to any one of claims 1 to 21 are performed.
